# EUROPEAN PATENT APPLICATION

(11) **EP 0 852 356 A1**
(43) Date of publication of application: **08.07.1998**
(21) Application number: 97927407.3
(22) Date of filing: 20.06.1997
(51) Int. Cl.: G06F 13/14, G06F 13/38, G06F 13/36, G06F 3/02, A63F 9/22

(54) **GAME DEVICE, PERIPHERAL DEVICE AND RELAY DEVICE**

(30) Priority: 20.06.1996 JP 160318/96
(71) Applicant: SEGA ENTERPRISES, LTD., Tokyo 144 (JP)
(72) Inventor: NAGASHIMA, Takeshi, Sega Enterprises, Ltd., Tokyo 144 (JP)
(74) Representative: Brown, Kenneth Richard
(86) International application number: JP9702133
(87) International publication number: WO9749040

(57) **Abstract**

Data processing means 10 for conducting processing required for playing of a game, and at least a pair of peripheral ports 12 are provided, and a peripheral device 2 contains a first line, a second line and a third line whereby identification signals which differ for each peripheral port are supplied. A game device 1 outputs an identification signal ID from the first line in order to investigate which of the ports a peripheral device is connected to. A peripheral device 2 connected to a peripheral port compares the identification signal supplied from the first line with the identification signal ID supplied from the third line, and if these match, it outputs verification data. When the game device 1 receives this verification data, it confirms that a peripheral device is connected to the port to which that identification signal is allocated.

## Description

### Technical field

The present invention relates to video game device provided with a plurality of ports to which peripheral devices are connected, and more particularly to identification technology for identifying peripheral devices connected to each port and the connection state of these peripheral devices.

### Background art

Generally, in a domestic video game device, joysticks, game pads, or the like, are connected to the game main unit, switches provided on these peripheral devices are operated and data is transmitted to the game main unit, and image processing required for the progress of the game in accordance with the game program is carried out on the basis on this data. In video game devices of this kind, it is possible for one person to play alone by connecting a single peripheral device, or it is possible for a plurality of users to play the same game simultaneously by connecting a plurality of peripheral devices.

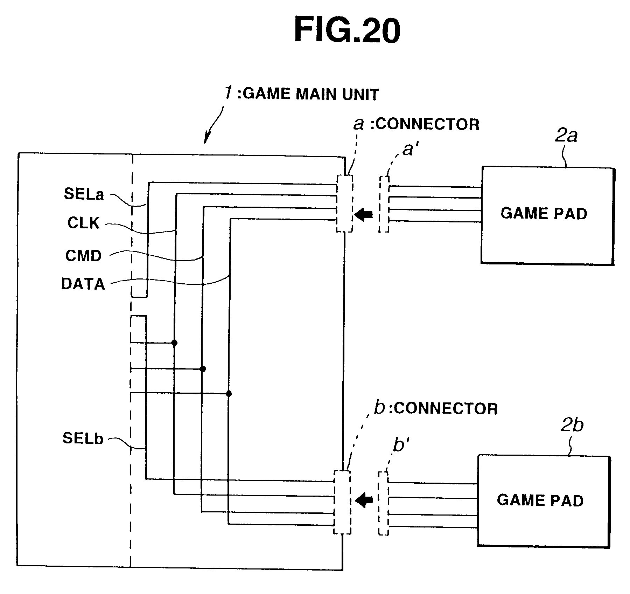

Fig.20 shows a block diagram of a conventional consumer-use video game device. As shown in the diagram, a game main unit 1 is provided with a plurality (usually two) ports, a and b. Here, a port means an input/output, which is provided with a socket having a plurality of connector pins. Game pads 2a and 2b are provided with directional command keys and various buttons required for game operation, and these are connected to either of the plurality of connector sockets a or b provided on the side of the game main unit via communications cables and plug connectors a' and b' having connector pins corresponding to the connector sockets a and b. The communications cables comprise various communications lines, such as a data line DATA for transferring data representing the states of the operating buttons, a command line CMD for transmitting control information, a selection signal line SEL for supplying selection signals indicating whether or not a selection has been made, a clock line CLK for transmitting clock pulses specifying the read-out timing for each data item, and the like. In many cases, data representing the states of the operating buttons is often sent in the form of serial data with a view to minimizing the number of data lines.

A CPU provided inside the game main unit controls the communications procedures in all of the communications lines apart from the clock line. The data line DATA, command line CMD and clock line CLK are connected jointly to all the port connectors.

When playing a game, each user operates a game pad and controls a game character which moves according to the user's operation of his or her game pad. Each user controls his/her own character independently of the operations of the other user(s) participating in the same game, and, for instance, he/she may conduct an attack on another character in accordance with the contents of the game program.

The game main unit 1 must be provided with identification means for identifying whether or not a game pad is connected to a port. In a conventional video game device, the game main unit 1 identifies whether or not game pad 2a or 2b is connected by means of wiring independent selection signal lines SEL a and SEL b to each connector socket a and b in the game main unit 1, and changing the logic state of selection signal line SEL a or SEL b in port units. If a game pad 2 (a or b) is connected to a port (a or b) of the game main unit 1 for which the logic state of the selection signal line SEL has changed, then this game pad 2 receives the logic state change in the selection signal line SEL and transmits a response signal indicating that it is connected, via the data line DATA to the game main unit 1. If there has been a response to the logic state change in the selection line SEL, then the game main unit 1 identifies that a game pad 2 is connected to the port (a or b) to which the selection signal line SEL (a or b) containing this logic state change has been supplied. On the other hand, if there is no response even when the logic state of the selection signal line SEL is changed, then the game main unit 1 identifies that no game pad 2 is connected to that port (a or b).

In this way, the data transmission method in a conventional video game device involves supplying a selection signal line for each game pad, and identifying the connection state of the game pads according to whether or not a response is obtained when the logic level of these selection signals is changed actively.

Incidentally, when developing a new video game device, it is common for technical specifications to be proposed which differ from other video game devices. Similarly, in many cases, the communications method for transmitting data from game pads to the game main unit also uses different technology to other video game devices, and an optimum communications method for that model is designed. In this way, proposing new communications technology rather than adhering to the communications technology in previously developed video game devices allows the technology to be developed, and gives increased scope for selecting a communications method suited to the mode of implementation.

### Disclosure of the invention

With the foregoing in view, it is a first object of the present invention to provide a game device which is capable of selecting readily whether or not a peripheral device is connected to a port.

Moreover, it is a second object of the present invention to provide a peripheral device for connecting to the game device whereby the aforementioned first object is achieved.

Furthermore, it is a third object of the present invention to provide a multiplayer(multi-tap) adapter for being connected between the game device of the first object and the peripheral device of the second object.

The present invention is a game device for data processing for a game in response to a signal including manipulation data transmitted from a peripheral device, said game device comprising:
data processing means;
a plurality of peripheral ports, each having a first line through which said data processing means supplies a data signal to a peripheral device connected to the port, a second line through which the peripheral device supplies a signal including manipulation data to said data processing means, at least one third line from which a port-identification signal is supplied to the peripheral device, and configuration means for configuring said at least one third line so as to supply the peripheral device with a port-identification signal, said plurality of peripheral ports being assigned respectively with port-identification signals different from each other;
first connection means for connecting said first lines in common so that said data processing means supplies a common data signal to each of said first lines;
second connection means for connecting said second lines in common to said data processing means;
and means for supplying said first lines in common with a data signal including a plurality of port-identification signals via said first connection means, said plurality of port-identification signals being transmitted serially;
the peripheral device connected to one of said plurality of peripheral ports having means for supplying the second line of said one port with an acknowledgment signal and a signal including manipulation data when one of the plurality of port-identification signals supplied via the first line of said one port agrees to the port-identification signal supplied from said at least one third line of said one port;
said game device, based on the acknowledgment signal, identifying the port through which a peripheral device transmits a signal including manipulation data via the second line.

The present invention is a game device, comprising a pair of said peripheral ports each having one of the third line, the configuration means of one of said pair of peripheral ports having means for connecting the third line to one of a power source potential and the ground potential, the configuration means of the other of said pair of peripheral ports having means for connecting the third line to the other of the power source potential and the ground potential.

The present invention is a game device, comprising four of said peripheral ports each having a pair of the third lines, the configuration means in each of said four peripheral ports having means for connecting said pair of the third lines to a power source potential or the ground potential, respectively, so that the potential combinations on the pairs of the third lines are different from each other.

The present invention is a peripheral device for use with a game device, comprising:
a first line which is supplied with a data signal via the first line of one of said peripheral ports to which the peripheral device is connected;
a second line through which the peripheral device supplies said data processing means with a signal including manipulation data via the second line of said one port;
at least one third line which is supplied with a port-identification signal via said at least one third line of said one port;
comparison means for comparing port-identification signals supplied via said at least one third line with the port-identification signal supplied via said first line; and
means for supplying an acknowledgment signal and a signal including manipulation data via said second line when a port-identification signal supplied via the first line agrees to the port-identification signal supplied via said at least one third line.

The present invention is a peripheral device for use with a game device, comprising:
a first line which is supplied with a data signal via the first line of one of said peripheral ports to which the peripheral device is connected;
a second line through which the peripheral device supplies said data processing means with a signal including manipulation data via the second line of said one port;
a third line which is supplied with a port-identification signal via the third line of said one port;
comparison means for comparing port-identification signals supplied via said third line with the port-identification signal supplied via said first line; and
means for supplying an acknowledgment signal and a signal including manipulation data via said second line when a port-identification signal supplied via the first line agrees to the port-identification signal supplied via said third line.

The present invention is a peripheral device for use with a game device, comprising:
a first line which is supplied with a data signal via the first line of one of said peripheral ports to which the peripheral device is connected;
a second line through which the peripheral device supplies said data processing means with a signal including manipulation data via the second line of said one port;
a pair of third lines which are supplied with a port-identification signal via the third lines of said one port;
comparison means for comparing port-identification signals supplied via said third lines with the port-identification signal supplied via said second line; and
means for supplying an acknowledgment signal and a signal including manipulation data via said first line when a port-identification signal supplied via the first line agrees to the port-identification signal supplied via said third lines.

The present invention is a peripheral device for use with a game device having a plurality of peripheral ports with one of which the peripheral device is connected, comprising:
a first line which is supplied with a data signal including a plurality of port-identification signals transmitted serially in different timings from the game device via the peripheral port to which the peripheral device is connected;
a second line through which the peripheral device supplies the game device with a signal including manipulation data via the peripheral port; at least one third line which is supplied with a port-identification signal from the game device via the peripheral port;
comparison means for comparing port-identification signals supplied via said at least one third line with the port-identification signal supplied via said first line; and
means for supplying an acknowledgment signal and a signal including manipulation data via said second line in a timing when a port-identification signal supplied via the first line agrees to the port-identification signal supplied via said at least one third line.

The present invention is a peripheral device, further comprising means for prohibiting a signal including manipulation data from being supplied via said second line at a timing when a port-identification signal supplied via said first line disagrees to the port-identification signal supplied via said at least one third line.

The present invention is a peripheral device, wherein the port-identification signal supplied via said at least third line is of a fixed potential value selected from a power source potential, the ground potential or a combination of the power source potential and the ground potential.

The present invention is a game device comprising:
data processing means for executing a game program;
a plurality of peripheral ports, each having a first line, a second line and at least one third line;
means for supplying a control signal including a plurality of port-identification signals in common to said first lines of said plurality of peripheral ports, said plurality of port-identification signals being transmitted serially in different timings;
means for connecting said second lines in common to said data processing means so that a data signal including manipulation data is supplied from a peripheral device, detachably connectable to one of said plurality of peripheral ports, to said data processing means;
means for supplying port-identification signals via said third lines, said plurality of peripheral ports being respectively assigned with port-identification signals different from each other, said port-identification signals being of a potential selected from a power source potential, the ground potential or a combination of the power source potential and the ground potential;
the peripheral device connected to one of said plurality of peripheral ports having means for supplying the second line of said one port with an acknowledgement signal and a signal including manipulation data at a timing when a port-identification signal supplied via the first line of said one port is agreed to the port-identification signal supplied from said at least one third line of said one port;
said data processing means collecting, via said means for connecting the second lines in common, manipulation data transmitted from said peripheral device connected to said one port at such timing when a port-identification signal supplied via the first line of said one port is agreed to the port-identification signal supplied from said at least one third line of said one port.

The present invention is a peripheral device for used with a game device, comprising:
a first line which is supplied with the control signal via the first line of one of said peripheral ports to which the peripheral device is detachably connected;
a second line through which the peripheral device supplies said data processing means with a signal including manipulation data via the second line of said one port;
at least one third line which is supplied with a port-identification signal via said at least one third line of said one port;
comparison means for comparing port-identification signals supplied via said first line with the port-identification signal supplied via said at least one third line;
means for supplying an acknowledgment signal and a signal including manipulation data via said second line when a port-identification signal supplied via the first line agrees to the port-identification signal supplied via said at least one third line; and
means for prohibiting a signal including manipulation data from being supplied via said second line at a timing when a port-identification signal supplied via said first line disagrees to the port-identification signal supplied via said at least one third line.

The present invention is a game device comprising four of said peripheral ports, each of said ports comprising:
a pair of said third lines;
means for electrically connecting said pair of third lines with a power source potential and the ground potential, respectively, so that the potential combinations on pairs of said third lines in said four ports are assigned differently from each other;
a first and a second terminals;
means for electrically connecting said first line and one of said third lines with said first terminal so as to transmit a signal indicative of the potential on said one of third lines and a control signal including a plurality of port-identification signals via said first terminal; and
means for electrically connecting said second line and the other of said third lines with said second terminal so as to transmit a signal indicative of the potential on said other of third lines and to receive a data signal transmitted from the peripheral device; and
means for electrically separating the transmitted data signal from the signal indicative of the potential on said other of third lines;
the peripheral device electrically separating said control signal from the signal indicative of the potential on said one of third lines and composing a port-identification signal indicative of the port to which the peripheral device is connected based on data derived from the signals indicative of the potentials on said pair of third lines.

The present invention is a peripheral device for use with the game device, comprising:
a connector detachably connectable to one of said peripheral ports with a first and a second terminal which are detachably connectable to the first and the second terminals of said game device;
a remote switch controller having a plurality of switches, a first line, a second line and a pair of third lines;
a first and a second wire electrically connecting said first and second terminals of the connector with said pair of third lines on said remote switch controller, respectively;
said remote switch controller further comprising:
means for electrically separating said control signal and the signal indicative of the potential on said one of third lines of said game device from said first wire and supplying the separated control signal to the first line on the remote switching controller and the separated signal indicative of the potential to one of said pair of third lines on said remote switch controller;
means for electrically connecting the second line on said remote switch controller with said second wire so that a signal including manipulation data indicative of said plurality of switches is transmitted via said second wire;
means for retrieving a port-identification signal, indicative of the peripheral port to which the peripheral device is connected, from the signal derived from said first wire and the signal indicative of the potential derived from said second wire;
comparison means for comparing port-identification signals electrically separated from said first wire with the retrieved port-identification signal;
means for supplying an acknowledgement signal and a signal including manipulation data from the remote switch controller via said second wire at a timing when a port-identification signal supplied via the first line agrees to the composed port-identification signal; and
means for prohibiting a signal including manipulation data from being supplied at a timing when a port-identification signal supplied via said first wire disagrees to the retrieved port-identification signal.

The present invention is a peripheral device, wherein said acknowledgement signal includes data identical to the port-identification signal judged as agree by said comparison means.

The present invention is a peripheral device, wherein said acknowledgement signal includes a peripheral-type identification data which is indicative of a type of the peripheral device.

The present invention is a peripheral device, further comprising means for generating group codes indicating whether said peripheral device belongs to a group having a unidirectional communications function, or to a group having a bidirectional communications function, wherein said comparing means, in addition to comparing said identification signals, compares the group code generated by said means for generating group codes with the group code received via the second line of said one peripheral port, and means for supplying data containing said verification signal and operating data outputs said verification signal when it is determined that both of said identification signals match and both of said group codes match.

The present invention is a peripheral device further comprising means for gathering the operational state of prescribed operating buttons, wherein, when outputting said verification signal, said means for supplying data containing said verification signal and operating data outputs the operational state of said operating buttons gathered by said means for gathering the operational state, as operating data after the verification signal to said second line.

The present invention is a peripheral device, wherein data input from said first line of said peripheral port and output to said second line is of a serial format whereby the bits comprising said data are transmitted in sequence from the most significant bit to the least significant bit.

The present invention is a peripheral device, wherein said means for supplying data containing said verification signal and operating data inputs a selection signal output by said game device when selecting said peripheral device from a fourth line of said one peripheral port, and it inputs a clock pulse designating the transmission timing for data transmitted via said first line and said second line from a fifth line of said one peripheral port, and said verification data is output on the basis of said clock pulse only when said selection signal is output.

The present invention is a peripheral device, wherein, if said selection signal has been output to said fourth line of said one peripheral port, then when data has been transmitted via said first line of said one peripheral port, or said peripheral device has transmitted data via said second signal line, and said peripheral device is in a state whereby it is able to receive subsequent data via said first line, said means for supplying data containing said verification signal and operational data outputs transmission request data requesting transmission of subsequent data, via said second line of said one peripheral port.

The present invention is a game device, wherein said wiring means allocates only a portion of the bits comprising said identification signal.

The present invention is a game device, wherein the selection signal output when any of said peripheral devices is selected is output to a fourth line connected jointly to a plurality of said ports, and clock pulses required for operation of said peripheral devices are connected jointly to a plurality of said ports.

The present invention is a game device wherein, if said game device has output said selection signal to said fourth line of said one peripheral port, then when it has transmitted data via said first line of said one peripheral port, or data has been transmitted from said peripheral device via said second signal line of said one peripheral port, and said game device is in a state whereby it is able to receive subsequent data via said second line, it outputs transmission request data requesting transmission of subsequent data, via said first line.

The present invention is a multiplayer adapter providing connection between a game device and a plurality of peripheral devices, comprises:
a port for connecting to said game device; and
a plurality of ports for connecting to each of said peripheral devices wherein a first line for supplying data from said game device to said peripheral devices and a second line for supplying data from said peripheral devices to said game device are connected jointly between the port connecting to said game device and each of the ports connecting to said peripheral devices and each port connecting to said peripheral devices further comprises one or more third lines, and means for holding said third lines respectively at power supply potential or earth potential, such that the combination of which of said plurality of third lines are held at power supply potential and which are held at earth potential is different at each of said ports.

The present invention is a multiplayer adapter according to claim 24, wherein said means for holding each of said third lines at power supply potential or earth potential allocates only a portion of the bits comprising said identification codes.

The present invention is a multiplayer adapter providing connection between a game device and a plurality of peripheral devices, comprises:
a port for connecting to said game device; and
a plurality of ports for connecting to each of said peripheral devices wherein a first line for supplying data from said game device to said peripheral devices, a second line for supplying data from said peripheral devices to said game device, and third lines used for identifying said peripheral devices are connected jointly between the port connecting to said game device and each of the ports connecting to said peripheral devices;
a selection signal for selecting said multiplayer adapter is supplied via a fourth line, from said game device to the port connecting to said game device;
means are also provided whereby, when said selection signal is output to said fourth line, a selection signal for selecting an individual port connected to said peripheral device is generated, corresponding to the identification code contained in the data supplied from said game device via said second line; and
the selection signal generated by said means for generating a selection signal is supplied to said peripheral device via a fourth line provided individually to each port.

### Brief description of the drawings

Fig.1 is general compositional view of a video game device in a first mode for implementing the present invention;
Fig.2 is a circuit diagram of a game pad in the first mode for implementing the present invention;
Fig.3 is a circuit diagram of a game main unit according to the first mode;
Fig.4 is a circuit diagram of a communications block in a game main unit according to the first mode;
Fig.5 is a flow-chart describing the operation of the game main unit;
Fig.6 if a flow-chart describing the operation of the game pad;
Fig.7 is a timing chart describing a basic communications procedure according to the present invention;
Fig.8 is a state transition chart in a communications sequence in a game main unit according to the first mode;
Fig.9 is a timing chart in a case where there is no reception waiting time in a game main unit according to the first mode;
Fig.10 is a timing chart in a case where there is a reception waiting time in a game main unit according to the first mode;
Fig.11 is a timing chart in a case where there is a response to a transmission request in a game main unit according to the first mode;
Fig.12 is a state transition chart for a communications sequence in a game pad according to the first mode;
Fig.13 is a timing chart in a case where there is no reception waiting time in a game pad according to the first mode;
Fig.14 is a timing chart in a case where there is a reception waiting time in a game main unit according to the first mode;
Fig.15 is a general compositional view of a video game device in a second mode for implementing the present invention;
Fig.16 is a general compositional view of a video game device in a third mode for implementing the present invention;
Fig.17 is a general compositional view of a video game device in a fourth mode for implementing the present invention;
Fig.18 is a circuit diagram of a multi-pad in the fourth mode for implementing the present invention;
Fig.19 is a diagram showing forms of connectors used in the modes for implementing the present invention; and
Fig.20 is a block diagram of a conventional video game device.

### Best mode for carrying out the invention

Below, appropriate modes for implementing the present invention are described with reference to the drawings.

### (I) First mode

In a first mode of implementation, an example is described wherein two ports for connecting peripheral devices are provided in the game main unit, which is a processing device.

### (General composition)

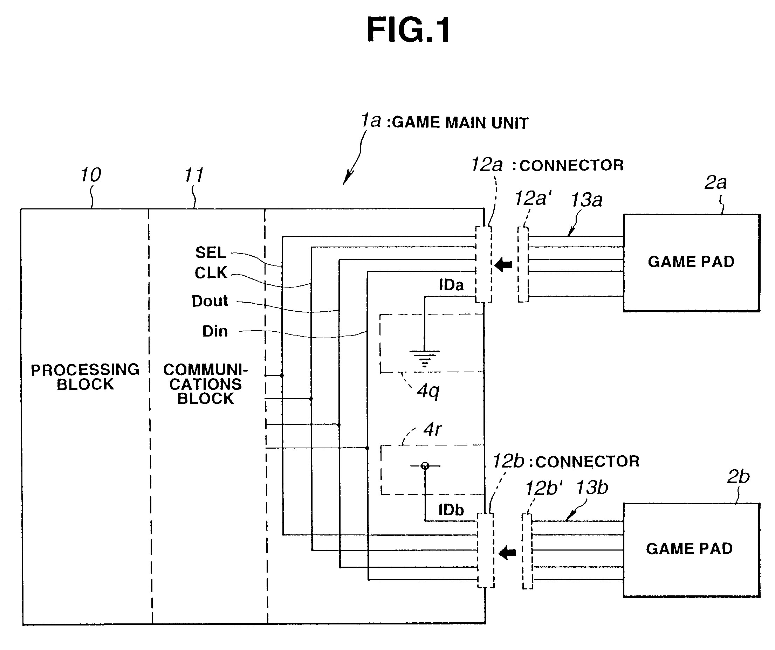

The video game device shown in Fig.1 has two ports for connecting peripheral devices, for example, game pads 2a, 2b, operated by the user, and socket connectors 12a, 12b are provided at the respective ports. The game pads 2a, 2b are provided respectively with communications cables 13a, 13b comprising plug connectors 12a', 12b' and a plurality of lines connecting the plug connectors to internal circuit boards in the game pads, and by connecting the plug connectors 12a', 12b' to the socket connectors 12a, 12b, the game pads 2a, 2b are electrically connected to the game main unit. The game main unit 1a according to the present invention is also provided with a communications block 11 which processes communications with the game pads, and a processing block 10 which processes operating data supplied from the game pads.

If two people are playing a game and two peripheral devices 2a, 2b are connected, it is desirable that the game pads or joysticks used are of the same internal structure and function. It is also possible for one person to play a game alone by connecting a peripheral device to one port 12a or 12b only.

Although not shown in the drawing, the game pads are provided with various operating key switches for controlling the progress of the game, for example, a cross-shaped key for moving a character or the like displayed on the monitor in an upward, downward, rightward or leftward direction, and trigger keys providing various supplementary operating functions (TRG-A, -B, -C, -X, -Y, -Z, and the like) as well as a START key.

In the example illustrated, the game pads are connected to the connector plugs via communications cables, but it is also possible to connect a plug connector installed on an adapter (this also being a type of peripheral device) directly to the socket, without using a communications cable, as in a wireless remote control. Furthermore, the communications cables may exit directly from the game main unit, connection being made by means of connectors at the peripheral device side.

The game main unit 1a comprises a processing block 10 and communications block 11, which correspond to the communications means of the present invention, and identification code assignment circuits 4q and 4r, which correspond to a portion of the identification code assignment means of the present invention. The game main unit 1a undertakes the main game processing for implementing the game program, and image processing, display, and the like. The identification code assignment circuit 4q is provided in the port at connector socket 12a and the identification code assignment circuit 4r is provided in the port at connector socket 12b.

The following communications lines are included in each port.
(a) Identification signal lines IDa and IDb (a third line) for transmitting to the game pad identification signals indicating which port the game pad 2a, 2b is connected to.
(b) A data output line D OUT (a first line) used for transmitting data from the game main unit 1a to the game pad 2a, 2b.
(c) A data input line D IN (a second line) used for transmitting data from the game pad 2a or 2b to the game main unit 1a. (d) A clock line CLK (a fifth line) used for supplying a clock pulse to the game pad.
(e) A selection signal line SEL (a fourth line) used for supplying selection signals to select a game pad, namely, a port.
(f) A power supply (Vcc) and ground potential line GND are always connected to the game pad, and description of these is omitted here.

Of the communication lines described above, the data output line D OUT, data input line D IN, clock line CLK and selection signal line SEL are communications lines which are common to each port, namely, to each game pad. In the game main unit 1a, these communications lines are distributed to both connector sockets 12a and 12b, and they are connected respectively to connector pins provided in the connector sockets. Each of these communications lines is connected to the communications lines in the communications cables via the connector pins provided in the connector sockets and connector pins provided in the connector plugs.

In Fig.1, the identification code assignment circuits 4a and 4b are shown in a form for providing identification codes in single bit. When state 0 is assigned to any of the bits comprising the identification code, the signal output terminal (connector pin) of the connector socket 12a or 12b which connects to the identification signal corresponding to this bit is connected to the ground potential. Similarly, if state 1 is assigned to any of the bits comprising the identification code, then the identification signal output terminal corresponding to this bit is connected to the power supply, or the like, via a resistance, or the like.

By means of the process described above, the identification code does not undergo dynamic (temporal) change, and it is supplied to the connectors at each port in the form of an individual fixed code.

### (Structure of game pads (peripheral devices))

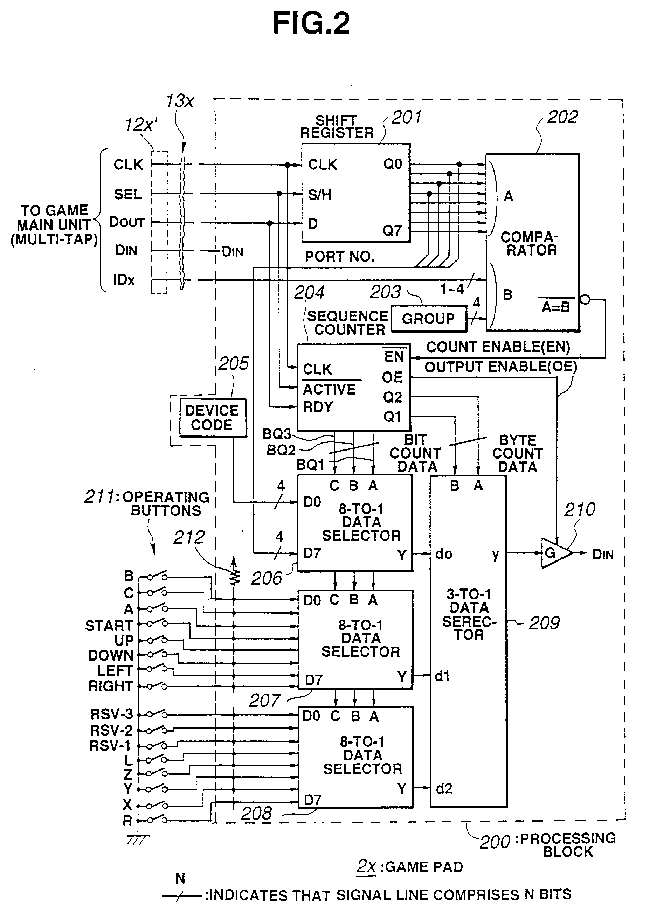

Fig.2 shows a circuit diagram of a game pad corresponding to a peripheral device according to the present invention. As shown in Fig.2, a game pad 2x (x indicates any letter of the alphabet) comprises a connector plug 12x', a communications cable 13x for same, a processing block 200 consisting of integrated circuits and the like, and operating buttons 211. The operating buttons 211 provided are: a cross-shaped key for controlling the direction of the character (up, down, left and right), trigger keys providing various supplementary operations (A, B, C, X, Y, Z, L, R), a START key for instructing a game to start, and reserve keys (RSV-1, -2, -3).

The processing block 200 is provided with: a shift register 201, a comparator 202, a group code generating circuit 203, a sequence counter 204, a device code generating circuit 205, 8-to-1 data selectors 206 to 208 (which select one input from eight inputs), a 3-to-1 data selector 209 (which selects one input from three inputs), and a buffer 210. In the processing block 200, the on/off state of each key is supplied to the 8-to-1 data selectors 207 and 208 from the operating buttons 211.

When the signal level at the shift/hold input terminal S/H is H, the shift register 201 shifts the serial data input to the input data terminal D internally one bit at a time. When the shift/hold input terminal S/H changes to level L, the internally shifted serial data is output in parallel to the output terminals (Q0 to Q7). In other words, when the selection signal in the selection signal line SEL is level H, the shift register 201 reads in serial data from the data output line D OUT, and when the selection signal is level L, it supplies the shifted data to the comparator 202. In the present specification, "level H" and "level L" correspond respectively to logic state 1 and logic state 0, and their electric potential level is determined according to the type of elements comprising the device. For example, if each element is of CMOS specification, then level H will be approximately 5V, and level L will be approximately 0V, whilst if the elements operate using a low power supply potential, then level H will be a lower voltage than this (for example, 3V).

The comparator 202 compares byte data supplied in a parallel format to channel A thereof with byte data supplied in a parallel format to channel B. The signal level at the comparison result output terminal (A=B) is set to level L if the byte data in the two channels match, and it is set to level H if they do not match (this output is called a count enable signal EN). Address data output from the shift register 201 is input to channel A. The most significant four bits of the byte data input to channel B are a group code supplied from the group code generating circuit 203. Here, a group code is a code for identifying a peripheral device in terms of its communications function, for instance, whether it is operating as an input device, or whether it is operating as a two-way communications device. The least significant four bits in the byte data input to channel B are an identification code supplied from the identification signal line IDx. In other words, the identification signal line supplied from the game main unit is connected to the input terminal for the least significant four bits in channel B. In the second and other modes described later, identification codes made up of four bits are used, so identification signal lines are connected to all four least significant bits in channel B. However, in the present first mode, only one identification signal line is supplied to each game pad. Therefore, in the present mode, this means that the single identification signal line is connected to the uppermost bit (fourth bit) of the least significant four bits in channel B, and the remaining first to third bits are supplied with a desired electric potential (power supply potential or ground potential). The logic state of channel B, which is provided in order to compare the identification codes, must match the logic state of channel A in all bits. Therefore, it should be noted that the bits corresponding to the first to third bits in channel B in the address data transmitted by the game main unit to the game pads must be set to the same logic level for transmission as the signal logic set by the desired electric potential supplied to the first to third bits in channel B.

As described above, the group code generating circuit 203 outputs a group code. It is desirable for the group code to be generated using a 4-bit switch (for example, a DIP (Dual Inline Package) switch,) or like, since it is supplied in parallel format. In this case, the user and manufacturer set a group code for a game pad in advance by setting the individual bit switches in the DIP switch to on or off. If there is no possibility of the group code setting being changed, then a ground potential or a power supply potential may be supplied via a resistor to each input terminal for inputting the group codes to channel B of the comparator 202.

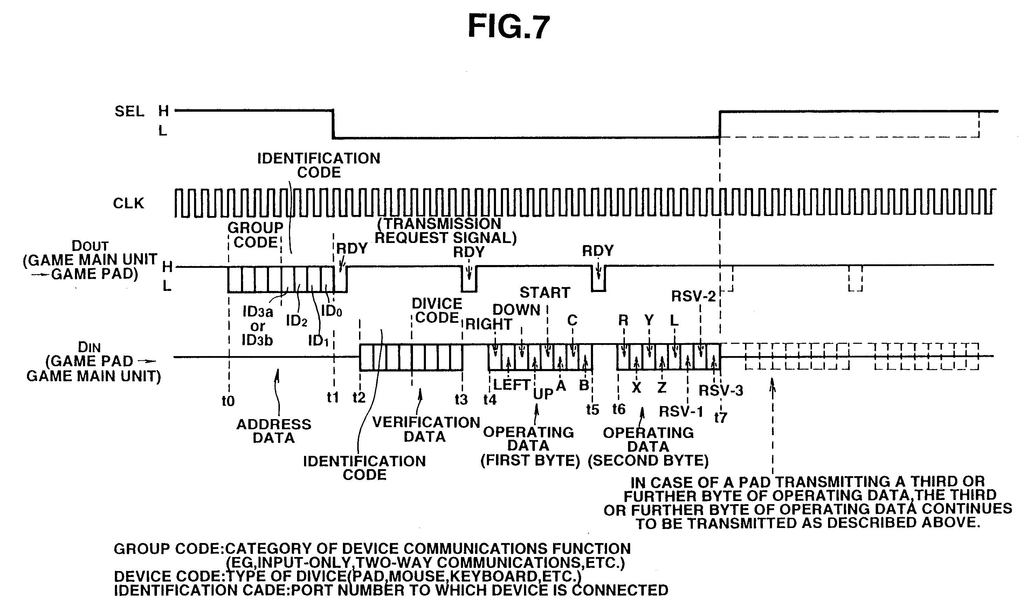

At the sequence counter 204, the clock signal line CLK is connected to the CLK terminal, the selection signal line SEL is connected to the ACTIVE terminal, and the data output line D OUT is connected to the RDY terminal. If a pulse of level L is input from the RDY terminal for a prescribed period of time, when the count enable signal EN is level L and the logic state of the ACTIVE terminal is level L, then the sequence counter 204 decrements the value representing the 3-bit output (bit count data: BQ1 to BQ3) by one. In addition, each time a level L pulse is input to the RDY terminal, the sequence counter 204 increments the value representing the 2-bit output (byte count data : Q1, Q2) by one. Therefore, in Fig.7 as described later, if a pulse (a RDY signal shown by data output line D OUT in Fig. 7) is input whilst the logic level of the selection signal line SEL is held at level L, then the value of the bit count data BQ1 to BQ3 will count down successively from "7" to "0" in accordance with the subsequent clock pulses. Moreover, each time a RDY signal is input, the byte count data Q1, Q2 changes: "0", "1", "2". The sequence counter 204 holds an output enable signal OE at level L during this count operation.

The device code generating circuit 205 generates a device code for the game pad. Here, a device code is a type identification code which indicates the type of peripheral device in terms of its function (for instance, a game pad (PAD), mouse, keyboard, or the like). A device code is generated by voltage settings using DIP switches and resistors, similarly to the group code generation in the group code circuit 203 described above.

The 8-to-1 data selectors 206 to 208 have 8 input terminals D0 to D7. One input is selected from the 8 input terminals D0 to D7 on the basis of the value indicated by the bit count data BQ1 to BQ3, and the data input to the selected input terminal is output via output terminal Y.

The 8-to-1 data selector 206 generates verification data. As verification data, the device code supplied from the device code generating circuit 205 is input to the least significant 4 bits of the input terminal D0 to D3, and the identification code supplied from the identification signal line group IDx is input to the most significant 4 bits D4 to D7.

The 8-to-1 data selectors 207 and 208 generate operating data. The on/off state of each of the operating buttons 211 is input to the input terminals D0 to D7 as operating data in the form of an electrical signal of level H or level L.

The 3-to-1 data selector 209 has three input terminals d0 to d2 and the output terminal Y of each 8-to-1 data selector 206 to 208 is connected to the three input terminals d0 to d2. The input terminal corresponding to the relevant value is selected from the input terminals d0 to d2 and the data input to the selected input terminal is output via an output terminal y.

The buffer 210 is a buffer for the 3 states for outputting data from the output terminal y in the 3-to-1 data selector 209. Namely, if the output enable signal OE supplied from the sequence counter 204 is held at level L, then the output of the data selector 209 is supplied to the data input line D IN, and if the output enable signal OE is at level H, then the output is set to a high impedance state.

Due to the composition of the processing block 200 described above,
provided that
(i) the identification code contained in the address data input from the data output line D OUT matches the identification code supplied from the identification signal line IDx; and
(ii) the group code contained in the aforementioned address data matches the group code generated by the group code generating circuit 203;
   then
(iii) when the selection signal SEL is maintained at level L,
(iv) each time a RDY signal is input from the data output line D OUT, the output is selected in order from the 8-to-1 data selectors 206 (verification code), 207 (first byte of operating data), 208 (second byte of operating data).
(v) The byte data from the 8-to-1 data selectors is output in order one bit at a time from the most significant bit (MSB) to the least significant bit (LSB) in that byte data, in accordance with clock pulses from the clock line CLK.

In the present mode, two 8-to-1 data selectors are used for gathering the operating state of the operating buttons and they transmit data in two bytes, but if there is a larger number of operating buttons, the number of data selectors may be increased accordingly. For example, if the number of operating buttons was increased by 8 (increasing the operating data by one byte), then one further 8-to-1 data selector would be provided for inputting the on/off state of the additional operating buttons. In this case, a data selector capable of selecting one input from four inputs would be provided in place of the 3-to-1 data selector 209. Four sets of output data from the aforementioned 8-to-1 data selectors 206 to 208 and the additional data selector would be supplied to these four inputs.

### [Composition of processing block in game main unit (processing device)]

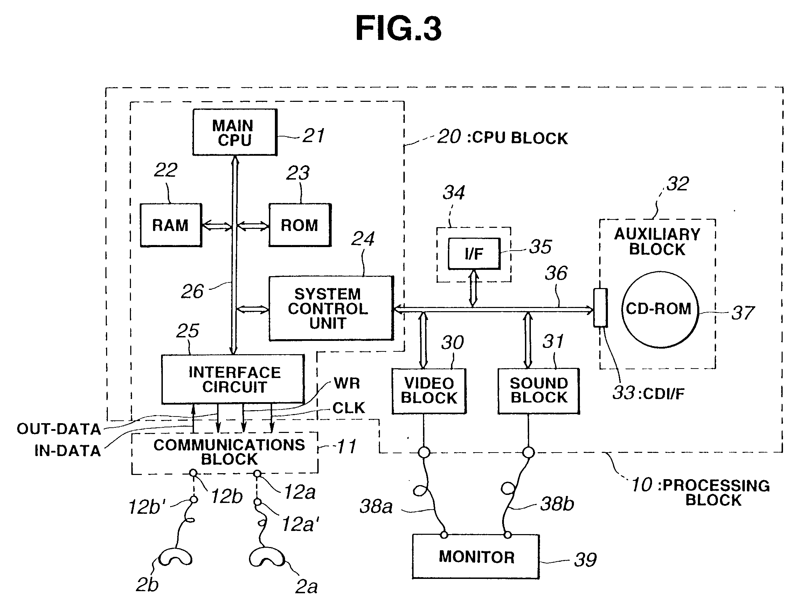

Fig.3 shows a block diagram centred on the processing block 10 in the game main unit 1a.

As shown in Fig.3, in broad terms, the processing block 10 comprises a CPU (Central Processing Unit) block 20, a video block 30, a sound block 31 and an auxiliary block 32. A cartridge interface 35 is also provided at a cartridge connection section 34, and a compact disc interface (CDI/F) 33 is provided at the auxiliary block 32.

The CPU block 20 comprises a main CPU 21, RAM 22, ROM 23, system control unit 24 and an interface circuit 25. The main CPU 21 is connected via a bus line 26 to the RAM 22, ROM 23, system control unit 24 and interface circuit 25. The system control unit 24 is connected via a bus line 36 to the video block 30, sound block 31, auxiliary block 32 and cartridge connection section 34.

The main CPU 21 controls the whole system, including the communications means according to the present invention. Device initialization programs and cartridge and CD IPL programs, and the like, are stored in the RAM 22 and ROM 23. Polygon data (polyhedron data) which forms a basis for generating virtual images for a game is stored in the video block 30 (hereafter, called *"*virtual images*"*). Identification codes and group codes relating to the present invention are stored in the RAM 22 and ROM 23. The system control unit 24 controls the bus lines 26, 36 and operates as a co-processor to the main unit CPU 21. The interface circuit 25 is a data input/output interface between the communications circuit 11 and the CPU block 20. Namely, the interface circuit 25 supplies output data OUT_DATA for transfer to game pad 2a or 2b, a write signal WR and a clock pulse CLK, to the communications block 11. It also receives input data IN_DATA from game pad 2a or 2b, via the communications block 11.

The video block 30 generates image data based on video control signals supplied from the main CPU 21 via the system control unit 24, and it converts this data to video signals conforming to a television format. These video signals are supplied via a cable 38a to a monitor unit 39. The monitor unit 39 displays images on its display screen on the basis of these video signals.

The sound block 31 generates digital sound signals on the basis of sound control signals supplied from the main CPU 21 via the system control unit 24. These digital sound signals are converted to analogue sound signals by means of an A/D converter (omitted from drawing) and they are supplied via a cable 38b to the monitor 39. The monitor 39 converts the analogue sound signals to sound waves by means of speakers (omitted from drawing).

The CPU block 20 inputs operating data transmitted by game pad 2a or 2b as IN_DATA via the communications block 11. It then calculates a new display position in the virtual image displayed on the screen of the monitor unit 39, on the basis of the input operating data. For example, the operating data is used to calculate the display coordinates on the screen of a virtual object (representing a person, vehicle, or the like) which moves in response to the user's operations, or to calculate the location of the viewpoint for the virtual image. The main CPU 21 specifies the polygon data required to generate image data in the video block 30 on the basis of the coordinates for the positions found by these calculations, and this polygon data is transferred from the RAM 22 and ROM 23 to the video block 30.

By means of the procedure described above, one new virtual image is generated on the basis of one operating data input cycle. If a virtual image is generated for each vertical synchronization period of a video signal, for example, then an animated image is displayed.

### [Composition of communications block in game main unit (processing device)]

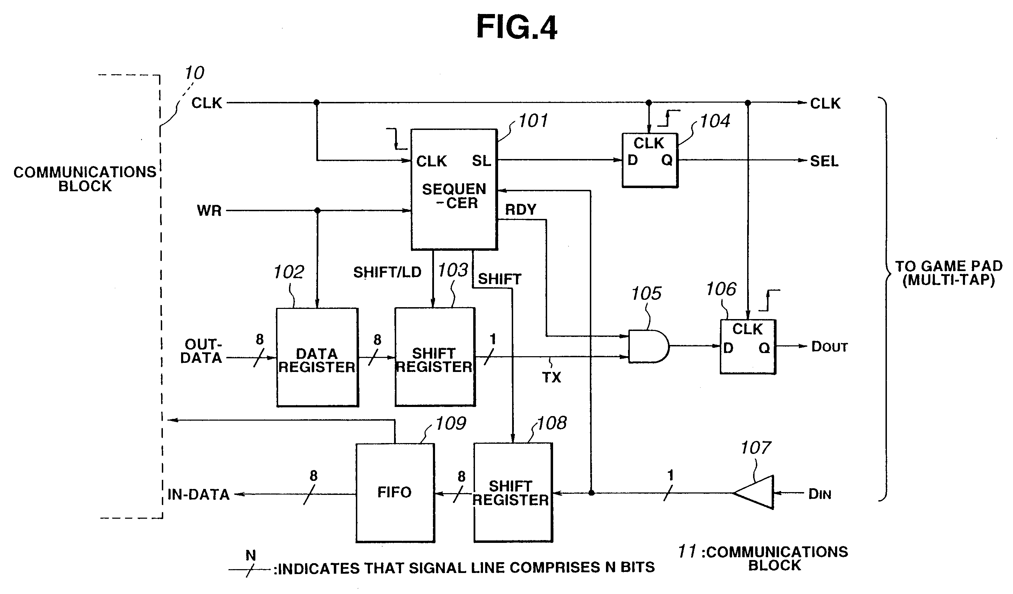

Fig.4 shows a block diagram of a communications block 11 in a game main unit 1a.

In broad terms, the communications block 11 comprises a sequencer 101, data register 102, shift registers 103, 108, flip-flops 104, 106, AND gate 105, buffer 107 and FIFO (first-in first-out) memory 109.

Firstly, a case is described where data is output to a peripheral device.

When there is data to be output to a peripheral device, the processing block 10 transmits a write signal WR to the sequencer 101 and the data register 102, and it outputs the data for transmission OUT_DATA to the data register 102. The processing block 10 continuously supplies a clock pulse CLK for synchronizing the output signals, to the sequencer 101, and flip-flops 104 and 106. This clock pulse CLK is also supplied to the clock signal line CLK for transmission to the peripheral devices.

The data register 102 latches output data OUT_DATA supplied when the write signal WR from the processing block 10 switches to level L, and outputs this data to the shift register 103. The sequencer 101 sets a shift load signal SHIFT-LD to level H when the write signal WR switches to level L. The shift register 103 outputs data supplied when the shift load signal SHIFT-LD switches to level H, to the AND gate 105 one bit at a time, starting from the most significant bit. In other words, parallel data supplied by the processing block 10 is converted to a serial data output. A transmission request signal, RDY signal (described later), is appended to this serial data at the AND gate, whereupon the data is synchronized by flip-flop 106 and output to the data output line D OUT.

Meanwhile, when the sequencer 101 has input 8 clock pulses after the write signal WR from the processing block 10 has switched to level L, it then sets the signal level at the SL terminal to L. At the rise of the next clock pulse after the signal level at the SL terminal has been set to L, the flip-flop 104 sets its output Q to level L. This output, which forms a selection signal, passes through the connector sockets 12a and 12b and is supplied to the game pads via the selection signal line SEL.

When the write signal WR is at level L, each time the sequencer 101 counts a total of 8 falls of the clock pulse, it outputs a pulse of level L for 1 clock cycle from its RDY terminal. This output from the RDY terminal is the transmission request signal RDY described above. Therefore, a RDY signal is output to the data output line D OUT each time 8 clock pulses are input.

Next, a case is described where the communications block 11 receives data from a peripheral device.

When data is received from a peripheral device via the data input terminals of the connector sockets 12a, 12b, the buffer 107 supplies this data to the shift register 108. When it has accumulated 8 bits of serial data output from the buffer 107, the shift register 108 outputs the accumulated 8 bits of data to the FIFO memory 109, in accordance with a shift signal SHIFT output by the sequencer 101. In other words, the shift register 108 converts the serial data to parallel data.

The FIFO memory 109 accumulates the parallel data output by the shift register 108 one byte at a time. When it has accumulated data, the FIFO memory 109 outputs a FULL signal requesting data read-out to the processing block 10. The processing block 10 detects this FULL signal and inputs the data accumulated in the FIFO memory 109 as input data IN_DATA.

### (Forms of connectors)

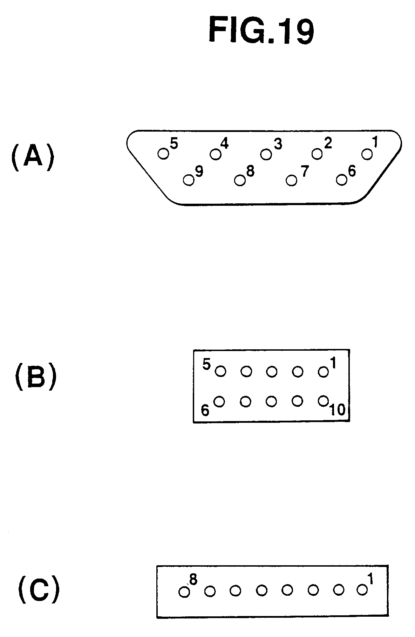

Fig.19 shows forms of connector sockets (connector plugs) which can be used in the present mode. Fig.19(A) is a pin lay-out diagram of a D-Sub connector socket; Fig.19(B) shows a box-type connector; and Fig.19(C) shows a flat cable connector.

There is no restriction on the shape of the connector in implementing the present invention. Provided that it can prevent incorrect connection by the operator and that it is provided with sufficient connector pins to accommodate the necessary communications lines, there is no limit on the form of the connector.

### (Description of the operation)

Next, the operation of the first mode is described. In the present mode, the game pads 2a and 2b operate asynchronously of each other. Therefore, the game main unit 1a initially transmits an identification code in the address data and by transmitting data only to the game pad connected to the port to which this identification code is assigned (a port of the game main unit, or an expanded port in a multi-tap set-up, as described later in the third mode,) data competition on the communications line is prevented.

### i) Operation of game main unit

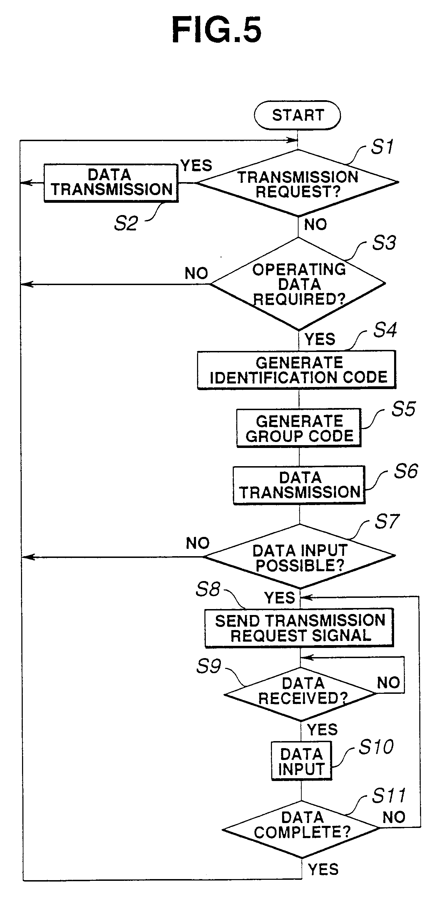

Fig.5 shows a flow-chart describing the operation of the game main unit 1a. Fig.7 shows a basic timing chart for data transmitted on each communications line by operation of the game main unit 1a and the game pads 2a or 2b. Fig.7 shows the logic levels for the selection signal line SEL connecting the game main unit port with the game pad port, the clock line CLK, the data output line D OUT and the data input line D IN. The diagram illustrates a case where the game main unit outputs address data (data at timing t₀ to t₁) to the data output line D OUT, and the game pad sends back in response the aforementioned verification data (timing t₂ to t₃) and 2-byte operating data (timing t₄ to t₅, timing t₆ to t₇) to the data input line D IN. Below, this timing chart is described with reference to the flow-chart in Fig.5.

Before investigating whether or not a game pad is connected to each port, the game main unit 1a determines whether a transmission request signal has been sent from the game pad side to the data input line D IN (step S (hereafter, abbreviated to "S") 1). In Fig.7, this transmission request signal is not sent, but if the game main unit was to detect a transmission request signal (S1; YES), it would then transmit data corresponding to this request (S2). Data requested for transmission from the game pad side to the game main unit side may be, for example, data relating to attributes for identifying whether or not the game pad is a type capable of communicating with the game main unit 1a. Generally, no transmission request signal is sent from the game pad side.

If no transmission request signal is sent from the game pad side (S1; NO), then the processing block 10 determines whether or not operating data is required at that timing (S3). The timing for inputting operating data from the game pad is a timing which matches the start of generation of a new frame image, for example, a timing which corresponds to the vertical synchronisation signal of the video signal in the video block 30. This is because, since one frame image is generated on the basis of the operating data input from the game pads, it is sufficient for operating data to be input once in each frame period, which is the display period for each image.

If operating data is not required at that timing (S3: NO), the processing block 10 returns to S1. If operating data is required at that timing (S3; YES), then it moves to input processing for the operating data.

To describe the processing implemented by the processing block 10 in brief, the processing block 10 examines whether or not game pads are connected to any of the parallel ports, in other words, the socket connectors, and if a game pad is connected, it inputs operating data from the corresponding socket connector. As described from step S4 onwards, this process is completed by means of the processing block 10 outputting an identification code assigned to a port it wishes to examine in its address data to the data output line D OUT, and a game pad connected to this port transmitting back verification data. If this verification data is transmitted, the processing block 10 determines that a game pad is connected to the port in question, and if no verification data is transmitted, then it determines that no game pad is connected to the port in question.

In order to conduct the processing described above, firstly, the processing block 10 reads out the assigned identification codes and game pad group codes from the memory (S4 and S5), and it supplies these as output data OUT_DATA to the communications block 11. The communications block 11 transmits this OUT_DATA to the data output line D OUT as address data (S6).

As shown in Fig.7, the address data output to the data output line D OUT between timing t₀ and t₁ contains a group code in its 4 most significant bits, and an identification code in its 4 least significant bits. As mentioned previously, a group code is determined according to the category of communications function. Group codes are allocated in advance so that, for instance, the group code is "0000" when the peripheral device is an input-only device, and it is "0001" when the peripheral device is capable of two-way communications. If this allocation is followed, then since game pads conduct two-way communications, the group code contained in the address data will be transmitted as "0001". Furthermore, as regards the identification code, since the fourth bit only (ID3a or ID3b) is used, the remaining first to third bits (ID0 to ID2) are transmitted in a "0" state, for example. Assuming the device initially determines whether or not a game pad is connected to the connector socket 12a, the identification code assignment circuit 4q (Fig.1) earths the identification signal line, setting the fourth bit to state "0", and therefore the 4 least significant bits of the address data will be "0000".

Moreover, directly after transmitting the address data, the communications block 11 sends a transmission request signal RDY requesting a response to the game pad. This transmission request signal RDY is a signal of level L and a 1-bit transmission period which is output on the data output line D OUT at timing t₁ in Fig.7 (the same applies to the signals transmitted at timings t₂ and t₃, described below).

If a game pad is connected to either of the connector sockets 12a, 12b, the address data transmitted on the data output line D OUT is supplied to this game pad. On the other hand, if mutually different identification codes (IDa and IDb) are supplied to each connector socket and game pads are connected to these connector sockets, then the identification codes will be supplied similarly to the game pads via the identification signal lines. As described below, a game pad for which the identification code contained in the address data matches the identification code supplied via the identification signal line sends back verification data containing a code matching this identification code.

When verification data is sent back, if the identification code contained in this verification data does not match the identification code contained in the address data transmitted by the processing block 10 itself (S7; NO), then the processing block 10 determines that the received verification data has either been mistakenly transmitted, or that it has been transmitted from a completely different type of peripheral device, and it ignores this verification data. However, if the identification code contained in the verification data matches the identification code contained in the transmitted address data (S7; YES), then the processing block 10 confirms that a game pad is connected to the port to which that identification code is assigned. Thereupon, it repeatedly transmits via this port a transmission request signal RDY (signals output from timing t₃ onwards) to the data output line (S8), requesting the game pad to transmit operating data.

When the game main unit 1a transmits a transmission request signal RDY, the game pad connected to the relevant port sends back the first byte of operating data between timings t₄ to t₅. The shift register 108 in the communications block 11 waits until it has received 8 bits of serial data (S9: NO), and when it has completed reception of 8 bits of data (S9; YES), it outputs the data to the FIFO memory 109. The processing block 10 inputs this data from the FIFO memory 109 (S10).

When input of the first byte of the operating data is completed, the processing block 10 transmits another transmission request signal RDY at timing t₅ in order to receive the second byte of operating data (S11; NO), and it repeats steps S9 to S10. If all the operating data has been gathered from the game pad (S11; YES), then the processing block 10 returns to standby until the next set of operating data is required.

By means of the steps described above, the processing for one port is completed. If there is another port, the processing block 10 repeats the processing in steps S1 to S11 using the identification code for this other port. Namely, assuming that the device subsequently determines whether or not a game pad is connected to connector socket 12b, the identification code assignment circuit 4r (Fig.1) holds the fourth bit of the identification code at state "1", and therefore the processing block 10 changes the identification code to "1000" and conducts address data transmission processing. In other words, the processing block 10 sends out a transmission request to a different game pad at each vertical synchronization period, and it gathers operating data by scanning through all of the game pads. Since the speed at which a human operates the operating buttons is usually considerably slower than the vertical synchronization rate, even if the operating data is gathered in succession from one port at each vertical synchronization period, there will be little deviation from the operations implemented by the players. However, if the processing can be completed within a single vertical synchronization period, then it is possible to gather operating data from a plurality of game pads for each vertical synchronization period. In this case, after determining that the data is complete (S11) in Fig.5, the processing block 10 judges whether or not there is another port to be accessed, and if there is another such port, it changes the identification code and repeats the operations from S4 to S11.

### ii) Operation of game pads

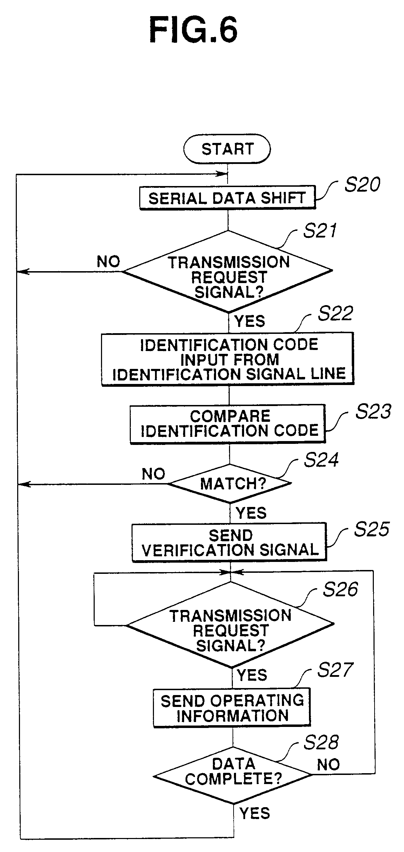

Fig.6 shows a flow-chart describing the operation of a game pad 2x. As described previously, the game pad 2x transmits verification data and operating data by the following procedure in response to address data transmitted from the game main unit 1a.

In general, the shift register 201 in the game pad 2x (see Fig. 2) inputs the logic state of the data output line D OUT in synchronization with a clock pulse supplied via the clock line CLK, regardless of whether or not data is present, and it shifts this data internally one bit at a time (S20). Therefore, the shift register 201 always holds the most recently transmitted 8 data bits.

When the game main unit 1a starts the port identification processing, as shown above (Fig.7), the game main unit 1a firstly transmits address data onto the data output line D OUT (timing t₀ to t₁), and it then transmits a transmission request signal RDY at timing t1, and simultaneously changes the selection signal line SEL to level L. If the transmission request signal RDY and the selection signal line SEL are not both at level L, the sequence counter 204 will not operate and ultimately the game pad 2x will not send back any data (S21; NO).

If the transmission request signal RDY switches to level L at the same time as the selection signal line SEL (S21; YES), then processing is conducted for the game pad 2x. When a transmission request signal RDY is input, the data shifted immediately beforehand by the shift register 201, namely, the address data, is supplied to channel A of the comparator 202. Meanwhile, the identification code in the identification signal line group IDx is input to the least significant 4 bits of channel B in the comparator 202, and the group code generated by the group code generating circuit 203 is input to the most significant 4 bits of this channel B (S22). Accordingly, the comparator 202 compares the contents of the address data in channel A with the identification code and group code input to channel B (S23).

If the comparator 202 does not output a count enable signal EN, in other words, if the two identification codes do not match (S24; NO), the shift register 201 continues to shift data appearing on the data output line D OUT (S20). If the comparator 202 does output a count enable signal EN, in other words, if the two identification codes do match (S24; YES), then the byte count data Q1, Q2 in the sequence counter 204 (Fig.2) indicate "00". Therefore, as shown in Fig.2, the 3-to-1 data selector 209 selects the input terminal d0, and as a result, the output from 8-to-1 data selector 206 is selected. Thereby, verification data containing a device code output by the device code generating circuit 205 as its least significant 4 bits, and the identification code that was contained in the address data as its most significant 4 bits is transmitted back to the game main unit 1a via the data input line D IN (S25; timings t2 to t3 in Fig. 7).

When the game main unit 1a receives verification data, as described previously, it sends out a further transmission request signal RDY (timing t3 in Fig.7). When the sequence counter 204 in the game pad 2x receives this transmission request signal RDY (S26; YES, timing t3 in Fig.7), the value of the byte count data Q1, Q2 in the sequence counter is incremented by one. Thereby, the 3-to-1 data selector 209 selects input d1, and reads in the output from 8-to-1 data selector 207. As a result, the first byte of the operating data is transmitted via the data input line D IN (S27, timing t4 to t5 in Fig.7). Similarly, when a further transmission request signal RDY (timing t5 in Fig.7) is received from the main game unit 1a (S28: NO, S206; YES), the 3-to-1 data selector 209 selects input d2 and reads in the output from 8-to-1 data selector 208. As a result, the second byte of the operating data is transmitted from the 8-to-1 data selector 208 via the 3-to-1 data selector 209 onto the data input line D IN (S27). When all data transmission has been completed (S28; NO), the game pad 2x continues to shift serial data until the next transmission request signal RDY is detected.

Therefore, by means of the operation described above, data is only transmitted back to the main game unit 1a by a game pad for which the identification code and group code contained in the address data both match with the identification code on the identification signal line and the group code generated by the game pad. Data cannot be transmitted by other game pads for which these codes do not match.

### iii) Communications sequence

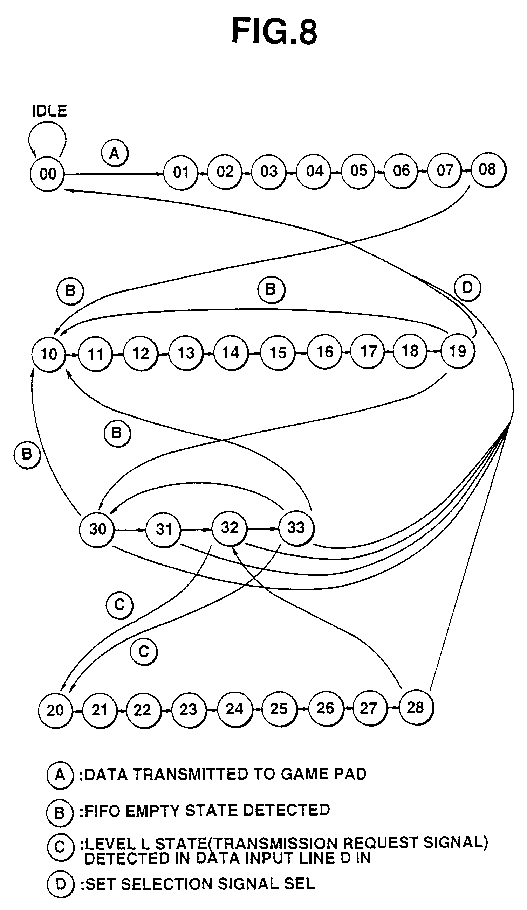

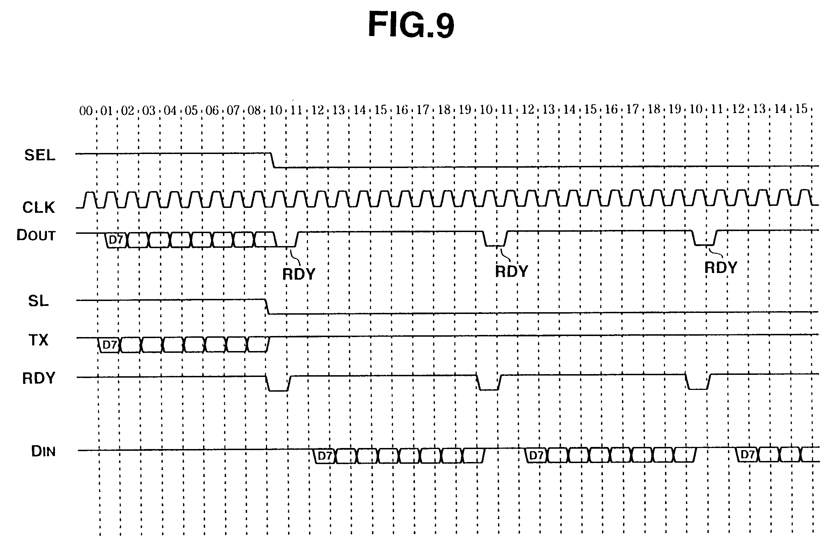

The communications sequence in the present mode described above is now described in specific terms with reference to Fig. 8 to Fig. 14. Fig.8 is a state transition diagram in a game main unit 1a, and Figs.9 to 11 are timing charts corresponding to this state transition diagram.

In Fig.8, the circled figures correspond to the clock numbers on the timing charts shown in Figs.9 to 11, and hereinafter, these numbers are indicated by #(number). The arrows labelled by circled letters represent conditions for operational state transitions in the game main unit 1a, and hereinafter, these are indicated by "(letter)". The condition in "A" is that data is transmitted from the game main unit 1a to the game pads 2a, 2b. The condition in "B" is that the FIFO memory 109 in the communications block 11 of the game main unit 1a is "empty" (buffer in FIFO memory is in empty state), and it is in a state to receive new data. The condition in "C" is that the data input line D IN is at level L (namely, a transmission request signal RDY). The condition in "D" is that the logic level of the selection signal SEL reverts to level H.

In Figs.9 to 11, each waveform corresponds to the waveforms of the sections of the communications block 11 as described in Fig.4. Specifically, SEL is the selection signal on the selection signal line, and SL is the selection signal from the sequencer 101. CLK is the clock on the clock line CLK, and RDY is the transmission request signal output by the sequencer 101. TX is the output from the shift register 103, D OUT is the data on the data output line, and D IN is the data on the data input line.

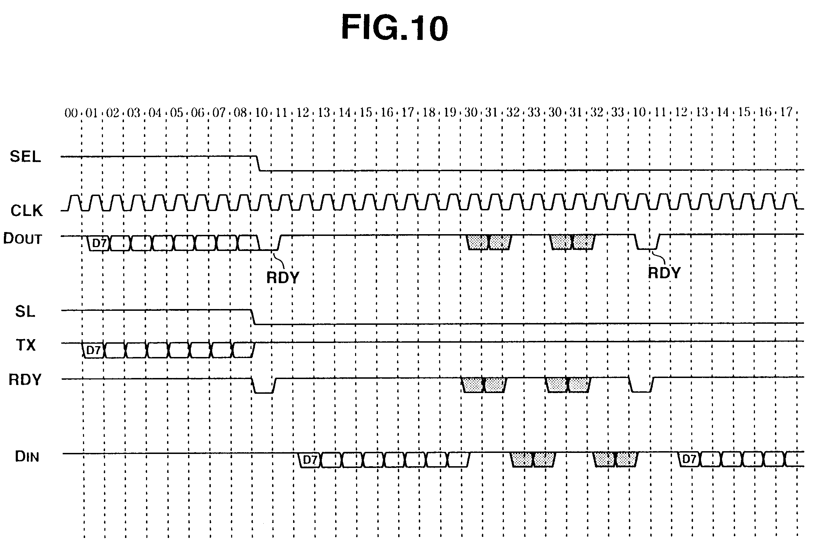

Fig.9 is a timing chart of a case where data transmission is conducted in a state where there is absolutely no wait before data is received. Fig.7 described above, and similarly, Fig. 10, are also timing charts of cases where there is no wait before data is received. #00 indicates an idle state. This corresponds to S1; YES or S2; NO described in Fig.5, and indicates an idle state before address data is transmitted. In sequences #01 to #08, address data is transmitted from the game main unit 1a to game pad 2a or 2b, and at sequence #10, a transmission request signal RDY is transmitted. When the game pad 2a or 2b sends back data in response, the communications block 11 implements a reception sequence in #10 to #19. Since the FIFO memory 109 matches condition "B" whenever it becomes empty, the communications block 11 repeats the reception sequence in #10 to #19.

Fig.10 shows a timing chart of a case where the data input at processing block 10 is delayed and there is a wait before data transmitted from the game pad 2a or 2b to the game main unit 1a is received. In Fig.9 described above, since a transmission request signal RDY is sent out at #10 immediately after verification data is transmitted in sequences #12 to #19, the verification data is output from the game pad to the data input line D IN. By contrast, in Fig.10, the shaded items displayed at sequences #30 and #31 are the timings at which a transmission request signal RDY should be sent, but these are not actually transmitted. Therefore, the game pad cannot transmit its operating data and only when a transmission request signal RDY is output at timing #10 does the game pad transmit this operating data.

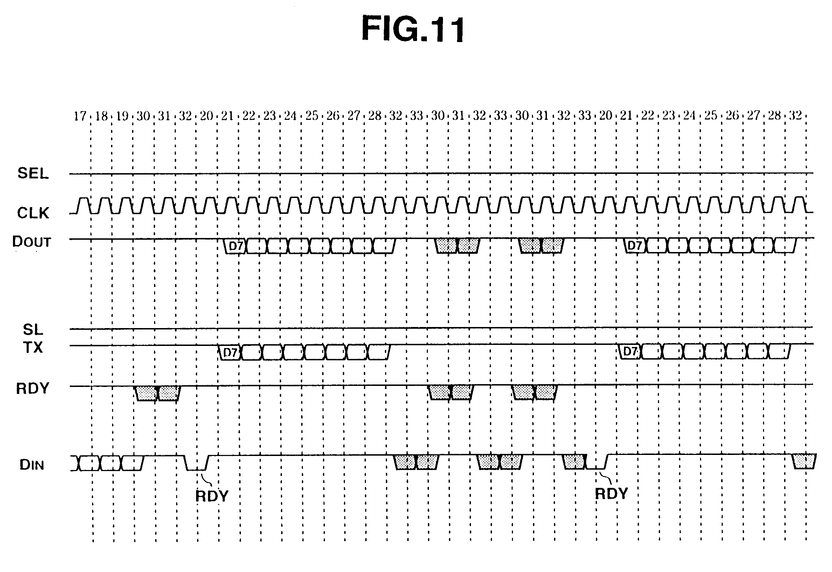

Fig.11 shows a timing chart of a case where a transmission request signal is sent out by either of the game pads 2a or 2b. Specifically, whereas Fig.9 and Fig.10 depict cases where the game main unit 1a outputs a transmission request signal and the game pads transmit data in response to this, Fig.11 shows a case where the game pads output transmission request signals. When a game pad makes a data transmission request to the game main unit, it outputs a transmission request signal onto the data input line D IN during the reception waiting sequences #30 to #33. When the game main unit 1a detects this, since it matches condition "C", the communications block 11 implements the transmission sequence shown in #20 to #28. When the prescribed data is transmitted onto the data output line D OUT, the communications block 11 implements another reception waiting sequence #30 to #33.

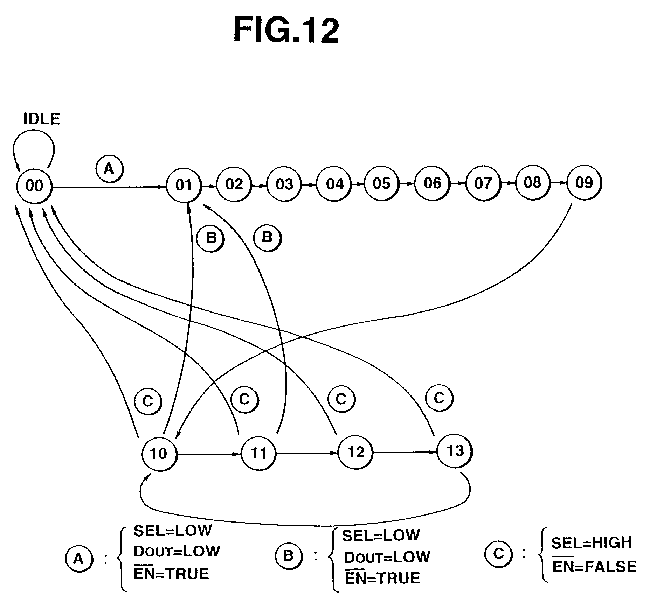

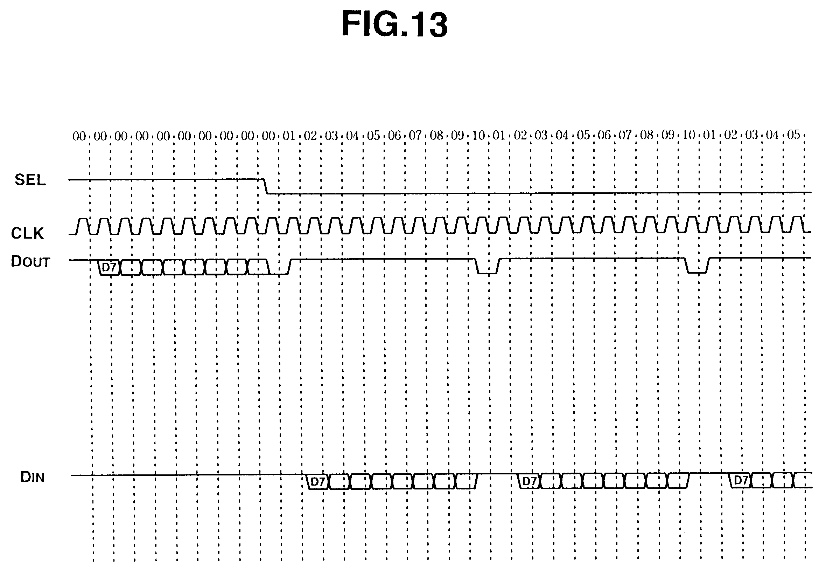

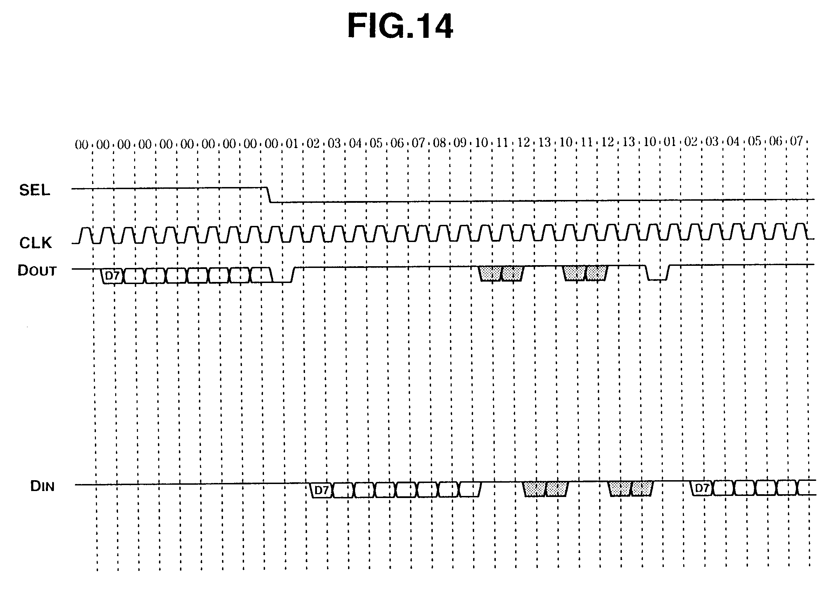

Fig.12 is a diagram of state transitions in a game pad 2x. Figs.13 and 14 are timing charts corresponding to this state transition diagram. The meaning of the circled numbers and the circled letters is the same as that in the game main unit 1a described above.

In Fig.12, the conditions in "A" and "B" are that the selection signal line SEL is level L (ON state), the data output line D OUT is level L (state wherein transmission request signal RDY is transmitted), the identification codes match, and the count enable signal EN from the comparator 202 is at level L. The condition in "C" is that the selection signal line SEL is level H (OFF state) and the identification codes do not match, in other words, the count enable signal EN is level H.

Similarly to Fig.9, Fig.13 shows a timing chart of a case where there is no wait before data is received at the game main unit 1a, in other words, there is no wait before data is transmitted from the game pad 2x. Specifically, when the game main unit 1a receives data at the #00 idle sequence, the selection signal line SEL is set to ON state, and a transmission request signal RDY is transmitted to the data output line D OUT, then condition "A" is satisfied in a game pad for which the identification codes match. This game pad 2x implements the transmission sequence in #01 to #09. When implementing the sequence in #10, if the transmission request signal RDY has been retransmitted, then this satisfies condition "B", and therefore the game pad 2x recommences the transmission sequence in #01 to #09.

Fig.14 shows a timing chart in a case where there is a wait before data is received at the game main unit 1a, in other words, there is a wait before data is transmitted from the game pad 2x. After the game pad 2x has transmitted its initial data, if a transmission request signal RDY has not been sent by the game main unit 1a when #10 sequence is implemented, then condition "B" is not satisfied. Therefore, in this case, the game pad 2x implements a transmission waiting sequence in #10 to #13. If a transmission request signal RDY is sent by the game main unit 1a whilst the game pad 2x is implementing this transmission waiting sequence, then condition "B" is satisfied and the transmission sequence in #01 to #09 is reimplemented. On the other hand, if condition "C" is satisfied during the transmission waiting sequence, the game main unit 1a is no longer able to request data transmission, and therefore the game pad 2x reverts to the idle sequence at #00.

### (Advantages of the present mode)

The advantages of the first mode of implementation described above are as follows.

Since identification codes are assigned to the respective connectors in the game main unit, a specific identification code is determined for each port. Therefore, by including in its address data the identification code assigned to a port it wishes to access and determining whether or not verification data is transmitted in return, the game main unit is capable of identifying whether or not a game pad is connected to that connector.

### (II) Second mode

A second mode of implementation relates to a game processing method in a case where the game main unit is provided with a plurality of ports.

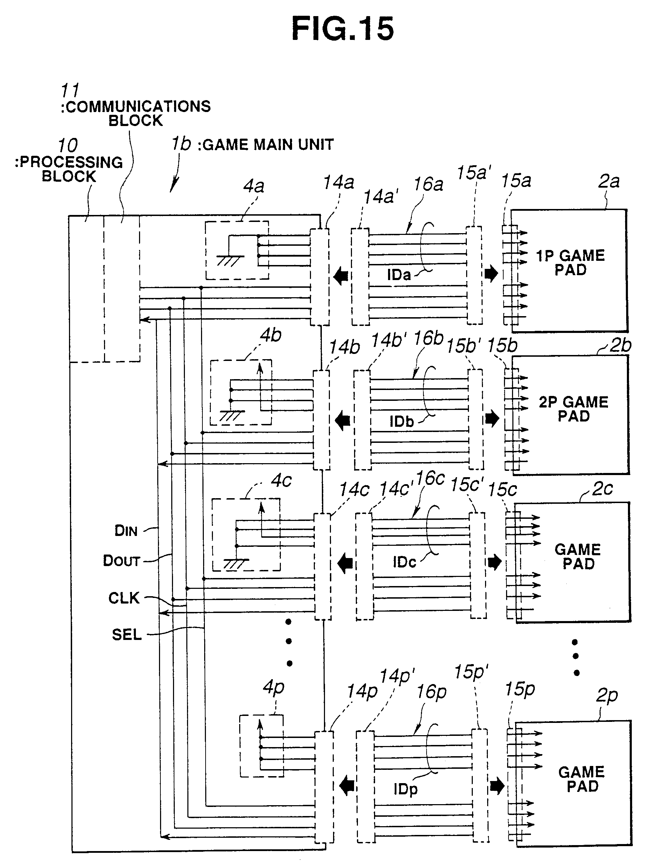

Fig.15 shows a general compositional view of a game device in this second mode. As shown in Fig.15, in broad terms, the video game device according to the present second mode comprises peripheral devices according to the present invention, for example, game pads 2a' to 2p', which are operated by users, and a processing device according to the present invention, for example, a game main unit 1b, which processes operating data supplied from the game pads.

The game pads used are similar to those in the first mode described above (see Fig.2). However, in the present mode, the identification codes comprise a total of four bits, from the 1st to 4th bits. Therefore, in the block diagram of the game pad 2x shown in Fig.2, the comparator 202 compares 4-bit identification codes. Apart from this, the composition is the same as the first mode and description thereof is omitted. Each game pad 2a to 2p is provided with a mutually similar internal structure and functions. It is not necessary for all of the maximum 16 (= 2⁴) game pads 2a' to 2p' to be connected, for example, the device can be used even if only one game pad is connected.

Furthermore, in the first mode described above, connector sockets are provided only on the game main unit side, but in the present mode, connector sockets 14a to 14p are provided on the game main unit 1b, and connector sockets 15a to 15p are provided on the game pads 2a' to 2p'. The two sets of connectors are connected by means of relay communications cables 16a to 16p provided with connector plugs 14a' to 14p' and 15a' to 15p' provided at either end thereof.

The game main unit 1b is provided with identification code assignment circuits 4a to 4p for assigning identification codes to the connector sockets, a processing block 10 and a communications block 11. The composition of the processing block 10, communications block 11 and each of the communications lines is similar to the composition in the first mode described above (see Fig.3 and Fig.4), and description thereof is omitted here.

The identification code assignment circuits 4a to 4p assign 4-bit identification codes. Specifically, whereas in the first mode, the identification code assignment circuits 4q and 4r assign only the fourth bit of the identification codes, in the present mode, the identification code assignment circuits respectively allocate 4-bit identification codes, simultaneously. A set of identification signal lines comprising 4 bits is termed an identification signal group.

Table 1 shows the identification codes assigned to each connector socket 14a to 14p in the present mode.

**Table 1**

| Connector socket | Identification code | Signal line group |
|---|---|---|
| 14a | 0000 | IDa |
| 14b | 0001 | IDb |
| 14c | 0010 | IDc |
| 14d | 0011 | IDd |
| 14e | 0100 | IDe |
| 14f | 0101 | IDf |
| 14g | 0110 | IDg |
| 14h | 0111 | IDh |
| 14i | 1000 | IDi |
| 14j | 1001 | IDj |
| 14k | 1010 | IDk |
| 14l | 1011 | IDl |
| 14m | 1100 | IDm |
| 14n | 1101 | IDn |
| 14o | 1110 | IDo |
| 14p | 1111 | IDp |

With the exception of the fact that 16 connector sockets are identified, each of the operations in the present mode is similar to those in the aforementioned first mode (see Fig.5 and Fig.6), and description thereof is omitted here.

According to the present second mode, even if a large number of game pads is connected, by assigning identification codes for each connector, in other words, for each parallel port, it is possible readily to identify whether or not a game pad is connected to each connector.

### (III) Third mode

In the third mode, the game main unit and game pads are connected by means of multi-taps acting as multiplayer adapters.

### (Description of the composition)

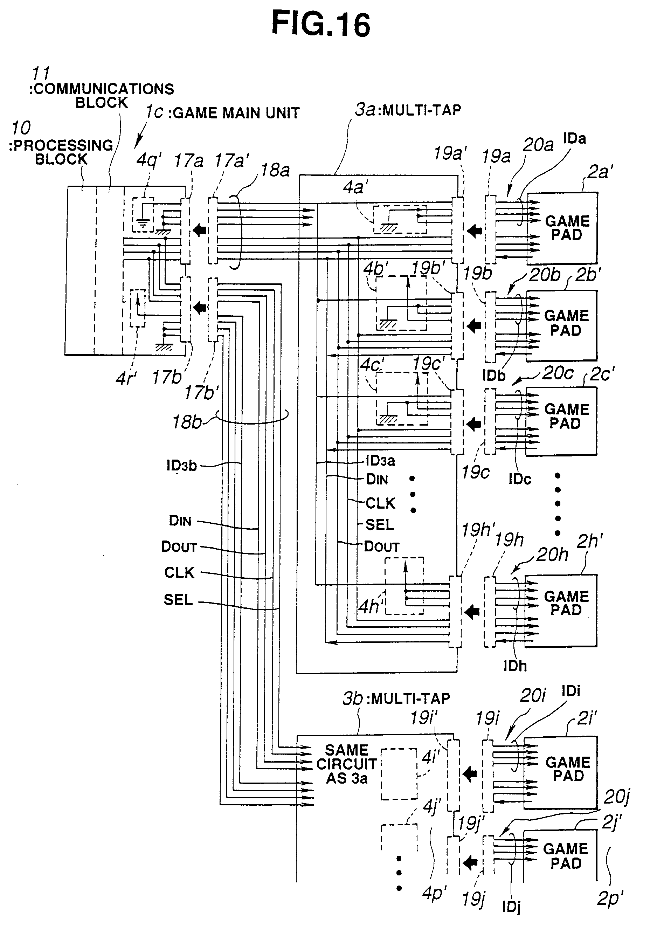

Fig.16 shows a general compositional view of a video game device according to the present third mode. In broad terms, the video game device according to the present mode comprises peripheral devices according to the present invention, for example, game pads 2a' to 2p', which are operated by the users, a processing device according to the present invention, namely, a game main unit 1c which processes operating data supplied by the game pads, and multi-taps 3a, 3b, which relay connection between the game pads and the game main unit 1c and form multiplayer adapters according to the present invention. Connections between devices are made by means of communications cables.

The composition of the game pads 2a' to 2p' is similar to that in the second mode (see Fig.2 and Fig.15) described above. The game pads 2a' to 2p' are connected to connector sockets 19a' to 19p' on the multi-taps 3a, 3b by means of communications cables 20a to 20p provided with connector plugs 19a to 19p.

The multi-taps 3a and 3b serve to enable the user freely to attach and detach a plurality of game pads, and also serve to simplify and shorten the cable wiring. Each of the multi-taps 3a, 3b are provided with identification code assignment circuits 4a' to 4p' corresponding to a portion of the identification code assignment means according to the present invention, and each can be connected respectively to a maximum of 8 game pads. The multi-taps 3a, 3b are provided with connector sockets 19a' to 19p' and are connected to the game pads 2a' to 2p' by means of connecting these to connector plugs 19a to 19p. The multi-tap 13a is connected to a connector socket 17a in the game main unit 1c via a communications cable 18a provided with a connector plug 17a'. The multi-tap 13b is connected to a connector socket 17b in the game main unit 1c via a communications cable 18b provided with a connector plug 17b'.

The processing block 10 and communications block 11 in the game main unit 1c have the same composition as in the first mode, and description thereof is omitted here. Furthermore, the game main unit 1c according to the present mode is provided with identification code assignment circuits 4q', 4r'. In other words, in the present mode, the fourth bit of the 4-bit identification codes is assigned by the identification code assignment circuits 4q' and 4r' in the game main unit, and the remaining three bits are assigned by the identification code assignment circuits 4a' to 4p' in the multi-taps 3a and 3b.

### (Identification code assignment)

The assignment of identification codes is the same as that in Table 1 in the second mode described above. Specifically, the identification code assignment circuit 4q' supplies a ground potential to the identification signal line ID3a, and the most significant bit of the identification code is set to "0" state for the connector socket 17a. On the other hand, the identification code assignment circuit 4r' supplies a power supply potential to the identification signal line ID3b, and the most significant bit of the identification code for connector socket 17b is set to "1" state. Furthermore, the identification code assignment circuits 4a' to 4h' in the multi-pad 3a assign the least significant three bits of the identification codes for the connector sockets 19a' to 19h' in accordance with Table 1. Meanwhile, the identification code assignment circuits 4i' to 4p' in the multi-pad 3b assign the least significant three bits of the identification codes for the connector sockets 19i' to 19p'.

Since the identification signal lines for the least significant 3 bits are essentially unnecessary between the game main unit and the multi-pads, it is possible to eliminate these identification signal lines. In the present mode, in order to have equal numbers of communications lines between the game main unit and the multi-pads and between the multi-pads and the game pads, for the sake of convenience, a ground potential or the like is supplied to the least significant three bits, without any identification signal lines being eliminated.

Furthermore, in the present mode, the least significant three bits (ID0 to ID2) of each identification code are assigned in the multi-tap and the most significant bit (ID3a or ID3b) is assigned in the game main unit 1a, but it is also possible for all 4 bits to be assigned in the multi-taps. In other words, from the viewpoint of convenience of use, the maximum number of game pads connected to each multi-tap should be determined by the number of ports which can be provided in each multi-tap, namely, the number of bits in the identification code assigned by the multi-taps. Moreover, in the present mode, the identification codes are taken as 4-bit codes since the number of assignable ports is 16, but the number of bits in the identification codes may be increased or decreased in accordance with the required maximum number of game pads.

The operation of the present third mode is similar to that in the first mode, and therefore description thereof is omitted here.

### (Advantages of the present mode)

The advantages of the aforementioned third mode of implementation are described below.
i) Since a portion of the identification code assignment circuits is provided in the multi-taps, it is possible to reduce the length of wiring between the multi-taps and game pads where there is a relatively large number of communications cables.
ii) Since a portion of the identification code assignment circuits is provided in the game main unit, a set of game pads connected to the multi-taps is taken as a single group, and for each group, users can operate game pads and play a game wherein a fight is conducted between the users. In other words, the game main unit can identify a plurality of groups by means of the most significant bits of the identification codes.

### (IV) Fourth mode

In the second mode or third mode of implementation described above, identification codes comprising a plurality of bits are used to identify a plurality of ports. However, in the present fourth mode of implementation, one bit only is used for the identification codes, and instead, the game pads are identified by supplying different selection signals for each game pad.

### (Description of the composition)

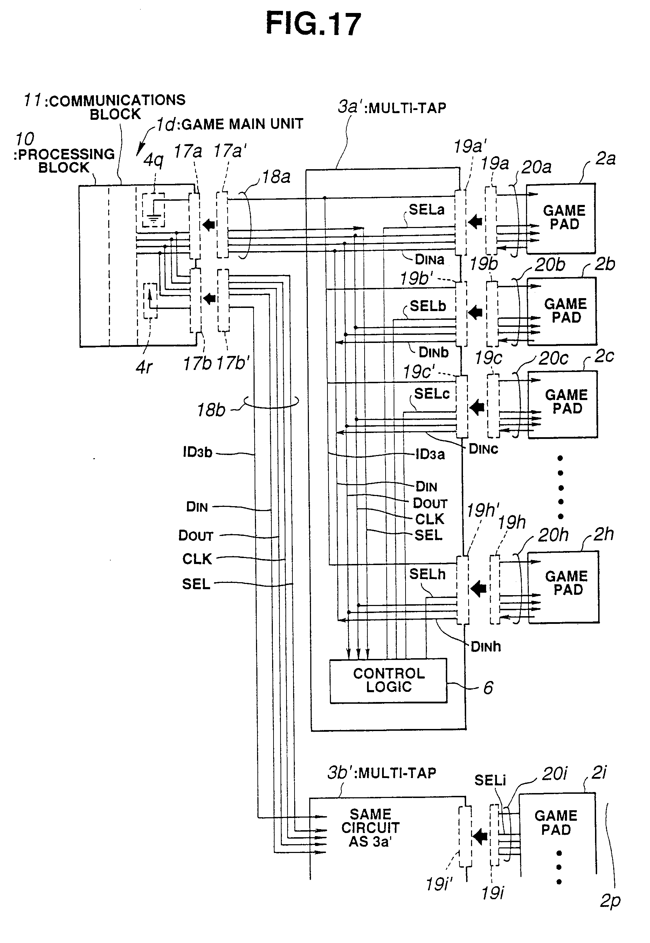

Fig.17 shows a general compositional view of a video game device according to the present fourth mode. As shown in Fig.17, the video game device according to the present mode is of practically similar composition to the third mode described above.

The game main unit 1d has a similar composition to the first mode (see Fig.1) or third mode (see Fig.16) described above. However, since only one bit is required for the identification code, the identification signal line comprises one line only. The game pads 2a to 2p have a similar composition to the game pad 2x according to the first mode described above (see Fig.2).

The multi-taps 3a' and 3b' are provided with a control logic 6, in place of the identification code assignment circuits in the third mode described above (see Fig.16). Therefore, there are no identification signal wires ID0 to ID2 as in the first mode for supplying these circuits from the multi-taps 3a' and 3b' to each game pad 2a to 2p. For identification codes, the multi-pad 3a' supplies only the identification signal line ID3a to the game pads 2a to 2h, and the multi-pad 3b' supplies only the identification signal line ID3b to the game pads 2i to 2p.

In the present mode, only the identification signal lines ID3a, ID3b corresponding to the most significant bits of the identification codes are supplied to the game pads 2a to 2p from the game main unit 1d via the multi-pads 3a', 3b'.

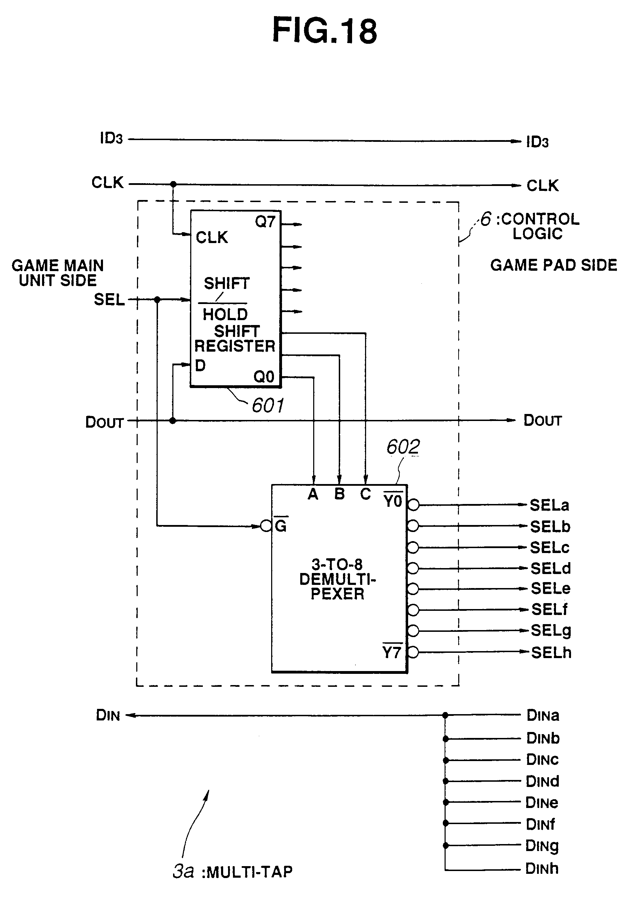

Fig.18 illustrates the control logic 6 in the multi-tap 3a' and the wiring of its peripheral communications cables. The multi-tap 3b' has a similar composition, and therefore only the composition of 3a' is described here. As shown in Fig.18, the control logic 6 of the multi-tap 3a' in the present third mode is provided with a shift register 601 and a 3-to-8 demultiplexer 602. Of the communications lines supplied from the game main unit 1d, the identification signal line ID3a, clock line CLK and data output line D OUT pass through the multi-tap and are supplied to each of the game pads. The clock pulse on the clock line CLK and the data on the data output line D OUT are also supplied to the shift register 601. The selection signal on the selection signal line SEL is supplied to the shift register 601 and the 3-to-8 demultiplexer 602, but it is not supplied to the game pad side. Data input lines D INa to D INb supplied from the game pads 2a to 2h are gathered into a single data input line D IN within the game pad 3a', and are supplied to the game main unit 1d.

When the selection signal line SEL supplied from the game main unit is in an OFF state (level H), the shift register 601 shifts data transmitted on the data output line D OUT in accordance with the clock pulse. If the selection signal line SEL is in an ON state (level L), then the shift operation is suspended and the shifted data is output in parallel.

The demultiplexer 602 inputs the least significant three bits of the parallel data output by the shift register 601 (namely, the least significant three bits of the identification codes,) ID0 to ID2, as selection data. Thereupon, the logic levels of the output terminals Y0 to Y7 indicated by the selection data are set to level L, and the logic levels of the other output terminals are set to level H. Each of the outputs SELa to SELh of the demultiplexer 602 is supplied to the selection signal output terminals of the connectors 19a' to 19h', and is taken as the selection signal for each multi-pad 2a to 2h.

### (Description of operation)

Next, the operation of the fourth embodiment is described with reference to Fig.18 and the timing chart in Fig.7. The operation of the game main unit 1d in the present mode can be regarded as similar to the operation in the first mode described above. Namely, when the game main unit 1d initiates communications, address data containing a group code in its most significant four bits and an identification code in its least significant four bits (see Fig.7) is output to the data output line D OUT. The identification codes are assigned as shown in the first mode.

As shown in Fig.7, since the logic of the selection signal line SEL is at level H at the point that the address data is transmitted to the data output line D OUT, the shift register 601 shifts and inputs the serial data from the data output line D OUT. When the game main unit 1a' has completed address data transmission, the logic of the selection signal line SEL is set to level L. When the logic of the selection signal line SEL switches to level L, the shift register 601 output the least significant three bits of the identification code to the demultiplexer 602. The demultiplexer 602 changes the logic levels of all the outputs of the output terminals Y0 to Y7 indicated by this 3-bit identification code to level L. Each output terminal Y0 to Y7 is supplied to the game pads 2a to 2h via the selection signal output terminals. The game pads 2a to 2h compare the MSB of the identification code indicated by the identification signal line ID3a and the identification code contained in the address data only when the selection signal lines SELa to SELh are set to level L. Therefore, as described in the first mode, only game pads for which the selection signal lines SELa to SELh are switched to level L transmit back verification data.

The game main unit 1d outputs the MSB of different identification codes for each multi-tap, similarly to the third mode. Therefore, even if multi-taps 3a and 3b as described in the third mode, or multi-taps 3a' and 3b' as described in the present mode, are connected to the game main unit 1d, exactly the same address data should be output. Specifically, in the present mode, 16 ports can be identified by means of 4-bit identification codes.

According to the fourth mode described above, a different configuration for multi-taps having the same merits as the third mode described above is provided. In particular, a merit is obtained in that only a small number of lines is required for the identification signal lines between the multi-taps and the game pads.

### (V) Other modes of implementation

The present invention can be implemented in other modes apart from those described above.

### i) Game pads

In the modes described above, a comparator is provided as a comparing means and a sequence counter and data selectors are provided as verification data outputting means, but the present invention is not restricted to this composition. For example, the functions of these modes may be realized by means of a CPU provided in the game pads. In this case, a serial interface IC, or the like, is used for transmitting and receiving serial data on the data output line D OUT and data input line D IN. Furthermore, a parallel interface IC, or the like, should be used for inputting data from the identification signal line group ID and selection signal line SEL. The processing steps follow the timing chart shown in Fig.7.

In the modes described above, the number of identification code bits compared was 4 bits, but this number of bits may be increased or decreased according to the number of ports to be used.

### ii) Multi-taps

In the modes described above, identification code assignment circuits are provided which assign the least significant three bits of the identification codes, but different modes are obtained depending on the number of identification code bits assigned by the multi-pads. For example, if each identification code comprises 4 bits, then if two bits are assigned by the processing device, it is possible to connect a maximum of four multi-pads, each enabling connection of four game pads. If all 4 bits are assigned by the multi-pads, then a single multi-pad enabling connection of a total of 16 game pads can be connected to the processing device. In other words, the manufacturer should determine the number of bits comprising the identification codes and the number of bits assigned by the processing device, according to the number of game pads which can be conveniently connected to a single multi-pad, and the number of people that can participate simultaneously in playing a game, and the like.

### iii) Game main unit

The number of bits in the identification codes assigned to the ports of the game main unit may be increased or decreased, as described in the preceding paragraph on multi-pads. Moreover, provided that communications are conducted in accordance with the timing chart in Fig.7, the present invention is not limited to the communications block composition shown in Fig.4 or the flow-chart shown in Fig.5, and communications may be conducted by means of other compositions and procedures.

### iv) Other configurations for assigning identification codes

In the embodiments described above, the identification codes are assigned by supplying a power supply potential or ground potential to the connector pins of each connector socket, either directly, or indirectly via a resistor. However, besides this, it is also possible to assign the identification codes by means of switches, or the like. For example, an identification code assignment circuit may be constructed such that, when each bit switch of a DIP switch is set to on, a power supply potential is applied to each connector pin connected to the identification code line, and when each bit switch is set of off, a ground potential is applied thereto. By adopting a composition of this kind, the identification codes assigned to each connector can be set and changed freely by the user and manufacturer. In this case, if, when the identification code is set to a particular code (for example, "1111"), any port assigned this identification code is reserved by the game main unit so that it is not recognized, then by setting the identification code of a port that is not to be used to this particular identification code, the user, or the like, can prohibit use of that port.

Furthermore, in the present mode of implementation, separate data output lines and data input lines are provided for the identification signal line, but it is desirable to omit the data output lines and data input lines by superimposing data on the identification signal line.

For example, at the data transmission side, rather than using a ground voltage or power supply voltage for the voltage supplied to the identification signal line, one voltage of a reference voltage source which provides two voltage values can be supplied via a resistor, or the like. A digital data signal having a restricted amplitude is superimposed on the identification signal line to which this reference voltage is supplied, by means of a DC limiting element, such as a capacitor, or the like. By this process, digital data is superimposed at a specific amplitude on the identification signal line centred on one of the reference voltage values.

At the receiving side, the AC component in the digital signal is removed from the signal supplied by the identification signal line, by means of a filter or rectifying device, and only the DC voltage component is used for the identification code. Furthermore, the DC component is removed from the signal supplied by the identification signal line, by a DC component removing means, such as a capacitor, or the like, and the voltage value is stabilized by means of a clamping circuit, or the like, and the signal is then used as data.

Thereby, for example, in a system having four ports, the data output lines can be eliminated by superimposing a data output line digital signal onto one of the two identification signal lines. Furthermore, on the peripheral device side, the data input lines can be eliminated by superimposing a data input line digital signal onto the remaining identification signal line.

If the system has two ports, then at least one of the data lines can be eliminated by superimposing the data from either the data output line or the data input line onto one of the identification signal lines.

### Industrial applicability

According to the present invention, if identification codes are supplied to each peripheral device separately from data, and the processing device transmits identification codes for peripheral devices it wishes to communicate with by means of data output lines, the processing device determines whether or not an identification code supplied by a peripheral device matches with an identification code supplied by the data output line. Therefore, when data is transmitted, the processing device can readily identify which port the peripheral device transmitting this data is connected to, without separately controlling selection signals.

Furthermore, since selection signal lines do not need to be provided for each peripheral device, even if a large number of peripheral devices are connected, it is not necessary to provide a hardware power supply for operating and controlling the selection signal lines.

Moreover, the time required for controlling conventional selection signal lines can be saved.

## Claims

1. A game device for data processing for a game in response to a signal including manipulation data transmitted from a peripheral device, said game device comprising:
data processing means;
a plurality of peripheral ports, each having a first line through which said data processing means supplies a data signal to a peripheral device connected to the port, a second line through which the peripheral device supplies a signal including manipulation data to said data processing means, at least one third line from which a port-identification signal is supplied to the peripheral device, and configuration means for configuring said at least one third line so as to supply the peripheral device with a port-identification signal, said plurality of peripheral ports being assigned respectively with port-identification signals different from each other;
first connection means for connecting said first lines in common so that said data processing means supplies a common data signal to each of said first lines;
second connection means for connecting said second lines in common to said data processing means;
and means for supplying said first lines in common with a data signal including a plurality of port-identification signals via said first connection means, said plurality of port-identification signals being transmitted serially;
the peripheral device connected to one of said plurality of peripheral ports having means for supplying the second line of said one port with an acknowledgment signal and a signal including manipulation data when one of the plurality of port-identification signals supplied via the first line of said one port agrees to the port-identification signal supplied from said at least one third line of said one port;
said game device, based on the acknowledgment signal, identifying the port through which a peripheral device transmits a signal including manipulation data via the second line.

2. A game device of claim 1, comprising a pair of said peripheral ports each having one of the third line, the configuration means of one of said pair of peripheral ports having means for connecting the third line to one of a power source potential and the ground potential, the configuration means of the other of said pair of peripheral ports having means for connecting the third line to the other of the power source potential and the ground potential.

3. A game device of claim 1, comprising four of said peripheral ports each having a pair of the third lines, the configuration means in each of said four peripheral ports having means for connecting said pair of the third lines to a power source potential or the ground potential, respectively, so that the potential combinations on the pairs of the third lines are different from each other.

4. A peripheral device for use with a game device as defined in claim 1, comprising:
a first line which is supplied with a data signal via the first line of one of said peripheral ports to which the peripheral device is connected;
a second line through which the peripheral device supplies said data processing means with a signal including manipulation data via the second line of said one port;
at least one third line which is supplied with a port-identification signal via said at least one third line of said one port;
comparison means for comparing port-identification signals supplied via said at least one third line with the port-identification signal supplied via said first line; and
means for supplying an acknowledgment signal and a signal including manipulation data via said second line when a port-identification signal supplied via the first line agrees to the port-identification signal supplied via said at least one third line.

5. A peripheral device for use with a game device as defined in claim 2, comprising:
a first line which is supplied with a data signal via the first line of one of said peripheral ports to which the peripheral device is connected;
a second line through which the peripheral device supplies said data processing means with a signal including manipulation data via the second line of said one port;
a third line which is supplied with a port-identification signal via the third line of said one port;
comparison means for comparing port-identification signals supplied via said third line with the port-identification signal supplied via said first line; and
means for supplying an acknowledgment signal and a signal including manipulation data via said second line when a port-identification signal supplied via the first line agrees to the port-identification signal supplied via said third line.

6. A peripheral device for use with a game device as defined in claim 3, comprising:
a first line which is supplied with a data signal via the first line of one of said peripheral ports to which the peripheral device is connected;
a second line through which the peripheral device supplies said data processing means with a signal including manipulation data via the second line of said one port;
a pair of third lines which are supplied with a port-identification signal via the third lines of said one port;
comparison means for comparing port-identification signals supplied via said third lines with the port-identification signal supplied via said second line; and
means for supplying an acknowledgment signal and a signal including manipulation data via said first line when a port-identification signal supplied via the first line agrees to the port-identification signal supplied via said third lines.

7. A peripheral device for use with a game device having a plurality of peripheral ports with one of which the peripheral device is connected, comprising:
a first line which is supplied with a data signal including a plurality of port-identification signals transmitted serially in different timings from the game device via the peripheral port to which the peripheral device is connected;
a second line through which the peripheral device supplies the game device with a signal including manipulation data via the peripheral port; at least one third line which is supplied with a port-identification signal from the game device via the peripheral port;
comparison means for comparing port-identification signals supplied via said at least one third line with the port-identification signal supplied via said first line; and
means for supplying an acknowledgment signal and a signal including manipulation data via said second line in a timing when a port-identification signal supplied via the first line agrees to the port-identification signal supplied via said at least one third line.

8. A peripheral device of claim 7, further comprising means for prohibiting a signal including manipulation data from being supplied via said second line at a timing when a port-identification signal supplied via said first line disagrees to the port-identification signal supplied via said at least one third line.

9. A peripheral device of claim 7, wherein the port-identification signal supplied via said at least third line is of a fixed potential value selected from a power source potential, the ground potential or a combination of the power source potential and the ground potential.

10. A game device comprising:
data processing means for executing a game program;
a plurality of peripheral ports, each having a first line, a second line and at least one third line;
means for supplying a control signal including a plurality of port-identification signals in common to said first lines of said plurality of peripheral ports, said plurality of port-identification signals being transmitted serially in different timings;
means for connecting said second lines in common to said data processing means so that a data signal including manipulation data is supplied from a peripheral device, detachably connectable to one of said plurality of peripheral ports, to said data processing means;
means for supplying port-identification signals via said third lines, said plurality of peripheral ports being respectively assigned with port-identification signals different from each other, said port-identification signals being of a potential selected from a power source potential, the ground potential or a combination of the power source potential and the ground potential;
the peripheral device connected to one of said plurality of peripheral ports having means for supplying the second line of said one port with an acknowledgment signal and a signal including manipulation data at a timing when a port-identification signal supplied via the first line of said one port is agreed to the port-identification signal supplied from said at least one third line of said one port;
said data processing means collecting, via said means for connecting the second lines in common, manipulation data transmitted from said peripheral device connected to said one port at such timing when a port-identification signal supplied via the first line of said one port is agreed to the port-identification signal supplied from said at least one third line of said one port.

11. A peripheral device for used with a game device as defined in claim 10, comprising:
a first line which is supplied with the control signal via the first line of one of said peripheral ports to which the peripheral device is detachably connected;
a second line through which the peripheral device supplies said data processing means with a signal including manipulation data via the second line of said one port;
at least one third line which is supplied with a port-identification signal via said at least one third line of said one port;
comparison means for comparing port-identification signals supplied via said first line with the port-identification signal supplied via said at least one third line;
means for supplying an acknowledgment signal and a signal including manipulation data via said second line when a port-identification signal supplied via the first line agrees to the port-identification signal supplied via said at least one third line; and
means for prohibiting a signal including manipulation data from being supplied via said second line at a timing when a port-identification signal supplied via said first line disagrees to the port-identification signal supplied via said at least one third line.

12. A game device of claim 10 comprising four of said peripheral ports, each of said ports comprising:
a pair of said third lines;
means for electrically connecting said pair of third lines with a power source potential and the ground potential, respectively, so that the potential combinations on pairs of said third lines in said four ports are assigned differently from each other;
a first and a second terminals;
means for electrically connecting said first line and one of said third lines with said first terminal so as to transmit a signal indicative of the potential on said one of third lines and a control signal including a plurality of port-identification signals via said first terminal; and
means for electrically connecting said second line and the other of said third lines with said second terminal so as to transmit a signal indicative of the potential on said other of third lines and to receive a data signal transmitted from the peripheral device; and
means for electrically separating the transmitted data signal from the signal indicative of the potential on said other of third lines;
the peripheral device electrically separating said control signal from the signal indicative of the potential on said one of third lines and composing a port-identification signal indicative of the port to which the peripheral device is connected based on data derived from the signals indicative of the potentials on said pair of third lines.

13. A peripheral device for use with the game device defined in claim 12, comprising:
a connector detachably connectable to one of said peripheral ports with a first and a second terminal which are detachably connectable to the first and the second terminals of said game device;
a remote switch controller having a plurality of switches, a first line, a second line and a pair of third lines;
a first and a second wire electrically connecting said first and second terminals of the connector with said pair of third lines on said remote switch controller, respectively;
said remote switch controller further comprising:
means for electrically separating said control signal and the signal indicative of the potential on said one of third lines of said game device from said first wire and supplying the separated control signal to the first line on the remote switching controller and the separated signal indicative of the potential to one of said pair of third lines on said remote switch controller;
means for electrically connecting the second line on said remote switch controller with said second wire so that a signal including manipulation data indicative of said plurality of switches is transmitted via said second wire;
means for retrieving a port-identification signal, indicative of the peripheral port to which the peripheral device is connected, from the signal derived from said first wire and the signal indicative of the potential derived from said second wire;
comparison means for comparing port-identification signals electrically separated from said first wire with the retrieved port-identification signal;
means for supplying an acknowledgment signal and a signal including manipulation data from the remote switch controller via said second wire at a timing when a port-identification signal supplied via the first line agrees to the composed port-identification signal; and
means for prohibiting a signal including manipulation data from being supplied at a timing when a port-identification signal supplied via said first wire disagrees to the retrieved port-identification signal.

14. The peripheral device of claim 4, wherein said acknowledgment signal includes data identical to the port-identification signal judged as agree by said comparison means.

15. The peripheral device of claim 4, wherein said acknowledgment signal includes a peripheral-type identification data which is indicative of a type of the peripheral device.

16. The peripheral device according to claim 4 further comprising means for generating group codes indicating whether said peripheral device belongs to a group having a unidirectional communications function, or to a group having a bidirectional communications function, wherein said comparing means, in addition to comparing said identification signals, compares the group code generated by said means for generating group codes with the group code received via the second line of said one peripheral port, and means for supplying data containing said verification signal and operating data outputs said verification signal when it is determined that both of said identification signals match and both of said group codes match.

17. The peripheral device according to claim 4 further comprising means for gathering the operational state of prescribed operating buttons, wherein, when outputting said verification signal, said means for supplying data containing said verification signal and operating data outputs the operational state of said operating buttons gathered by said means for gathering the operational state, as operating data after the verification signal to said second line.

18. The peripheral device according to any of claims 4 to 9, claim 11 or claim 13, wherein data input from said first line of said peripheral port and output to said second line is of a serial format whereby the bits comprising said data are transmitted in sequence from the most significant bit to the least significant bit.

19. The peripheral device according to any of claims 4 to 9, claim 11 or claim 13, wherein said means for supplying data containing said verification signal and operating data inputs a selection signal output by said game device when selecting said peripheral device from a fourth line of said one peripheral port, and it inputs a clock pulse designating the transmission timing for data transmitted via said first line and said second line from a fifth line of said one peripheral port, and said verification data is output on the basis of said clock pulse only when said selection signal is output.

20. The peripheral device according to claim 19, wherein, if said selection signal has been output to said fourth line of said one peripheral port, then when data has been transmitted via said first line of said one peripheral port, or said peripheral device has transmitted data via said second signal line, and said peripheral device is in a state whereby it is able to receive subsequent data via said first line, said means for supplying data containing said verification signal and operational data outputs transmission request data requesting transmission of subsequent data, via said second line of said one peripheral port.

21. A game device according to any one of claims 1 to 3, claim 10 or claim 12, wherein said wiring means allocates only a portion of the bits comprising said identification signal.

22. A game device according to any one of claims 1 to 3, claim 10 or claim 12, wherein the selection signal output when any of said peripheral devices is selected is output to a fourth line connected jointly to a plurality of said ports, and clock pulses required for operation of said peripheral devices are connected jointly to a plurality of said ports.

23. A game device according to claim 22 wherein, if said game device has output said selection signal to said fourth line of said one peripheral port, then when it has transmitted data via said first line of said one peripheral port, or data has been transmitted from said peripheral device via said second signal line of said one peripheral port, and said game device is in a state whereby it is able to receive subsequent data via said second line, it outputs transmission request data requesting transmission of subsequent data, via said first line.

24. A multiplayer adapter providing connection between a game device and a plurality of peripheral devices, comprises:
a port for connecting to said game device; and
a plurality of ports for connecting to each of said peripheral devices wherein a first line for supplying data from said game device to said peripheral devices and a second line for supplying data from said peripheral devices to said game device are connected jointly between the port connecting to said game device and each of the ports connecting to said peripheral devices and each port connecting to said peripheral devices further comprises one or more third lines, and means for holding said third lines respectively at power supply potential or earth potential, such that the combination of which of said plurality of third lines are held at power supply potential and which are held at earth potential is different at each of said ports.

25. The multiplayer adapter according to claim 24, wherein said means for holding each of said third lines at power supply potential or earth potential allocates only a portion of the bits comprising said identification codes.

26. A multiplayer adapter providing connection between a game device and a plurality of peripheral devices, comprises:
a port for connecting to said game device; and
a plurality of ports for connecting to each of said peripheral devices wherein a first line for supplying data from said game device to said peripheral devices, a second line for supplying data from said peripheral devices to said game device, and third lines used for identifying said peripheral devices are connected jointly between the port connecting to said game device and each of the ports connecting to said peripheral devices;
a selection signal for selecting said multiplayer adapter is supplied via a fourth line, from said game device to the port connecting to said game device;
means are also provided whereby, when said selection signal is output to said fourth line, a selection signal for selecting an individual port connected to said peripheral device is generated, corresponding to the identification code contained in the data supplied from said game device via said second line; and
the selection signal generated by said means for generating a selection signal is supplied to said peripheral device via a fourth line provided individually to each port.
